# EUROPEAN PATENT APPLICATION

(11) **EP 4 842 101 A1**
(43) Date of publication of application: **18.11.2026**
(21) Application number: 24921690.4
(22) Date of filing: 03.12.2024
(51) Int. Cl.: H04W 72/0446

(54) **COMMUNICATION METHOD AND APPARATUS**

(30) Priority: 30.01.2024 CN 202410135180
(71) Applicant: Huawei Technologies Co., Ltd., Shenzhen, Guangdong 518129 (CN)
(72) Inventor: YI, Feng, Shenzhen, Guangdong 518129 (CN); SU, Hongjia, Shenzhen, Guangdong 518129 (CN); ZHANG, Yi, Shenzhen, Guangdong 518129 (CN); XU, Jiaojiao, Shenzhen, Guangdong 518129 (CN); QI, Hong, Shenzhen, Guangdong 518129 (CN)
(74) Representative: Huawei European IPR
(86) International application number: PCT/CN2024/136561
(87) International publication number: WO 2025/161668

(57) **Abstract**

This application relates to a communication method and apparatus. The method includes: determining at least one signal received in a first window, where the at least one signal includes a first signal, a first time-frequency resource indicated by the first signal is located in a second window, and the second window includes at least one time-frequency resource; and determining a candidate resource set in the second window based on the strength of a second signal on the first time-frequency resource and at least one threshold. Some or all resources in the candidate resource set are used to send a first sensing signal.

## Description

This application claims priority to Chinese Patent Application No. 202410135180.8, filed with the China National Intellectual Property Administration on January 30, 2024, and entitled "Communication Method and Communication Apparatus," which is incorporated herein by reference in its entirety.

### TECHNICAL FIELD

This application relates to the communication field, and in particular, to a communication method and apparatus.

### BACKGROUND

In the integrated communication and sensing technology, a device may perform communication or sensing. A signal sent by the device for communication is referred to as a communication signal, and a signal sent by the device for sensing is referred to as a sensing signal. If the resource for sending a communication signal by one device overlaps the resource for sending a sensing signal by another device, the sensing signal will cause interference to the communication signal, thereby affecting communication performance.

### SUMMARY

This application provides a communication method and a communication apparatus, for reducing or avoiding a conflict between a communication resource and a sensing resource, thereby reducing or avoiding interference caused by a sensing signal to a communication signal. The technical solutions of this application may be applied to a sidelink (sidelink, SL) communication system, or may be applied to another communication system.

To achieve the foregoing objectives, the embodiments of this application use the following technical solutions:
According to a first aspect, an embodiment of this application provides a communication method. The method may be performed by a first communication apparatus . The first communication apparatus may be a terminal device (which may also be referred to as user equipment, user equipment, UE), or the first communication apparatus may be a component configured to implement a function of the terminal device. For example, the first communication apparatus is an internal unit/module, a circuit, a chip, or the like of the terminal device. The following describes the method provided in the first aspect by using an example in which the first communication apparatus is a first terminal device.

The communication method includes: determining, by a first terminal device, at least one signal received within a first window, where the at least one signal includes a first signal, a first time-frequency resource indicated by the first signal is located in a second window, and the second window includes at least one time-frequency resource; and determining a candidate resource set from the second window based on the strength of the first signal and at least one threshold. Some or all resources in the candidate resource set are used to send the first sensing signal.

A sensing signal refers to a signal used for sensing, where sensing may also be referred to as detection, probing, or the like. The working principle of sensing is to determine attribute information (for example, information such as speed, distance, shape, and size) of a sensed object by sending a signal and receiving a signal reflected from the sensed object after the signal is sent. Compared with a sensing signal, there is another type of signal (for example, a communication signal), which may carry information/content that needs to be exchanged between two communication ends. The sensing signal itself may not carry any content. In an integrated communication and sensing system, the same time-frequency resource may be used to send a sensing signal or a communication signal. If a sensing signal and a communication signal are simultaneously sent on the same time-frequency resource, the sensing signal may cause interference to the communication signal. Therefore, for the resource selection window (namely, the second window), the first terminal device may determine, from the second window based on the strength of the first signal and at least one threshold, a candidate resource for sending the sensing signal, to select an appropriate time-frequency resource for sending the sensing signal, thereby reducing or avoiding interference of the sensing signal to the communication signal.

In an implementation, the first terminal device determines, based on the strength of the first signal on the first time-frequency resource and the at least one threshold, a candidate resource set from the second window, which includes: the first terminal device excludes the second time-frequency resource from the second window based on the strength of the first signal and the at least one threshold. The second time-frequency resource partially or entirely overlaps the first time-frequency resource. A process in which the first terminal device determines the candidate resource set from the second window may be considered as excluding an unavailable second time-frequency resource from the second window, and a resource remaining after the second time-frequency resource is excluded forms the candidate resource set.

In an implementation, any threshold one of the at least one threshold is associated with one or more of the following priorities: a priority of the first sensing signal, a priority of a communication signal from the second communication apparatus, or a priority of a sensing signal from the second communication apparatus.

The at least one threshold is used to select resources for the sensing signal. The at least one threshold may be (pre)configured or predefined, or may be determined by the first terminal device. For example, each threshold may be determined based on one or more of the foregoing priorities.

In an implementation, the at least one threshold includes a first threshold, and the strength of the first signal is higher than the first threshold.

The first threshold may be (pre)configured. When the strength of the first signal is higher than the first threshold, it may be considered that the first time-frequency resource is used or reserved, for example, there are communication signals and/or sensing signals on the first time-frequency resource. Therefore, when the strength of the first signal is higher than the first threshold, the second time-frequency resource that partially or entirely overlaps with the first time-frequency resource may be excluded from the second window. In this solution, the first terminal device selects an unused time-frequency resource to send a sensing signal, thereby avoiding interference to the communication signal and/or other sensing signals.

Optionally, the first threshold is lower than the first communication threshold, and the first communication threshold is associated with a priority of the communication signal sent by the second communication apparatus. Alternatively, the first communication threshold is related to a priority of the communication signal sent by the second communication apparatus. In this way, as many resources as possible in the second window may be excluded, so that the obtained candidate resources do not cause interference to the communication signal and/or other sensing signals.

In an implementation, the proportion of the remaining time-frequency resources in the second window after the second time-frequency resource is excluded from the second window is less than the first proportion, and the method further includes: increasing, by the first terminal device, the first threshold, and determining a candidate resource set from the second window based on the increased first threshold and the strength of the first signal.

The first proportion may be (pre)configured or predefined. In this solution, if the proportion of the candidate resources determined based on the first threshold in the second window is less than the first proportion, it may be considered that there are insufficient resources available for the first terminal device to use for sending a sensing signal. In this case, the first threshold may be increased, and the candidate resource set may be determined again from the second window based on the increased first threshold, so that there are sufficient candidate resources available for the first terminal device.

In an implementation, the at least one threshold includes a second threshold, and the strength of the first signal is less than the second threshold.

The second threshold may be (pre)configured. When the strength of the first signal is less than the second threshold, it may be considered that the signal strength received by other communication apparatuses around the first terminal device is relatively weak. In this case, if the first terminal device still sends a sensing signal using the first time-frequency resource, the sensing signal may cause interference to the received signals of the other communication apparatuses. Therefore, when the strength of the first signal is less than the second threshold, the second time-frequency resource that partially or entirely overlaps with the first time-frequency resource may be excluded from the second window. Through this solution, the first terminal device excludes the time-frequency resources that may be used by other terminal devices to send sensing or communication signals, thereby reducing or even avoiding interference to communication signals or other sensing signals.

Optionally, the first threshold is higher than the second communication threshold , and the second communication threshold is associated with a priority of a communication signal sent by the second communication apparatus. Alternatively, the second communication threshold is associated with a priority of a communication signal sent by the second communication apparatus. In this way, when the second time-frequency resource is excluded from the second window, a relatively large quantity of candidate resources may be reserved, thereby improving resource utilization.

In an implementation, a proportion, in the resource selection window, of the time-frequency resources remaining after the second time-frequency resource is excluded from the second window is less than the first proportion, and the method further includes: the first terminal device reduces the second threshold, and determines a candidate resource set from the first window based on the reduced second threshold and the strength of the first signal.

In this solution, if the proportion of the candidate resources determined according to the second threshold in the second window is less than the first proportion, it may be considered that there are insufficient resources for the first terminal device to use for sending the sensing signal. In this case, the second threshold may be reduced, and the candidate resource set may be determined again from the second window based on the reduced second threshold, so that an available candidate resource set is sufficient for the first terminal device to use.

In an implementation, the at least one threshold includes a third threshold and a fourth threshold, where the fourth threshold is greater than the third threshold, the strength of the first signal is higher than the third threshold, and is lower than the fourth threshold.

The third threshold is similar to the first threshold, and may be greater than or equal to the first threshold. The fourth threshold is similar to the second threshold, and may be less than or equal to the second threshold. When the strength of the first signal is greater than or equal to the third threshold and is less than or equal to the fourth threshold, it may be considered that if a sensing signal is sent on the first time-frequency resource, superposition of all sensing signals on the first time-frequency resource may cause interference to a communication signal and/or another sensing signal on the first time-frequency resource. Therefore, when the strength of the first signal is greater than or equal to the third threshold and is less than or equal to the fourth threshold, the second time-frequency resource that partially or entirely overlaps with the first time-frequency resource may be excluded from the second window. By using this solution, the first terminal device excludes the time-frequency resources that may be used by another terminal device to send a sensing signal, thereby reducing or even avoiding interference to the communication signal and/or another sensing signal. In addition, the third threshold and the fourth threshold can exclude fewer unavailable resources, and there are more candidate resources left available, thereby making the candidate resources more flexible.

In an implementation, the proportion of the remaining time-frequency resources in the resource selection window after the second time-frequency resource is excluded from the second window is less than the first proportion, and the method further includes: reducing, by the first terminal device, a third threshold, and determining the candidate resource set from the second window based on the strength of the first signal and the reduced third threshold; and/or increasing, by the first terminal device, a fourth threshold, and determining the candidate resource set from the second window based on the strength of the first signal and the increased fourth threshold.

In this solution, if the proportion of the candidate resources determined according to the third threshold and the fourth threshold in the second window is less than the first proportion, it may be considered that there are insufficient resources available for the first terminal device to use for sending the sensing signal. In this case, the third threshold may be reduced and/or the fourth threshold may be increased, and the candidate resource set may be determined again from the second window based on the updated third threshold and the updated fourth threshold, so that there are sufficient candidate resources available for the first terminal device to use.

According to a second aspect, an embodiment of this application provides a communication apparatus. The communication apparatus has a function of implementing behavior in the method example in the first aspect, and beneficial effects may be learned with reference to the related descriptions in the first aspect, and details are not described herein again. For example, the communication apparatus may be the first terminal device in the first aspect. For another example, the communication apparatus may be an apparatus that can support the terminal device in implementing the functions required by the method provided in the first aspect. For example, the communication apparatus may be a chip or a chip system in the terminal device.

In a possible design, the communication apparatus includes a baseband apparatus and a radio frequency apparatus.

In a possible design, the communication apparatus includes corresponding means (means) or modules configured to perform the method in the first aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, where the functional unit is referred to as a transceiver unit, and the functional unit can implement the sending function and the receiving function; or the sending unit and the receiving unit may be different functional units, where the transceiver unit is a general term for these functional units. These units (modules) can perform corresponding functions in the method example in the first aspect. For details, refer to the detailed descriptions in the method example, and details are not described herein again.

According to a third aspect, an embodiment of this application provides a communication apparatus. The communication apparatus may be the communication apparatus in the second aspect in the foregoing embodiments, or may be a chip or a chip system disposed in the communication apparatus in the second aspect. The communication apparatus includes a communication interface and a processor, and optionally, further includes a memory. The memory is configured to store a computer program or instructions or data, and the processor is coupled to the memory and the communication interface. When the processor reads the computer program or instructions or data, the communication apparatus is enabled to perform the method performed by the first terminal device in the foregoing method embodiments. For example, the communication apparatus may be a terminal device, or the communication apparatus may be a functional module in a terminal device, such as a baseband processor and a radio frequency chip.

According to a fourth aspect, an embodiment of this application provides a chip system. The chip system includes a processor, and may further include a communication interface, configured to implement the method according to the first aspect. Optionally, the chip system further includes a memory. The memory is configured to store a computer program (which may also be referred to as code or instructions). The processor is configured to invoke and run the computer program from the memory, so that a device having the chip system installed performs the method according to the first aspect and any one of its implementations. The chip system may be formed by a chip, or may include the chip and other discrete components.

According to a fifth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to the first aspect.

In a specific implementation process, the communication apparatus may be a chip, the input circuit may be an input pin, the output circuit may be an output pin, and the logic circuit may be a transistor, a gate circuit, a flip-flop , or various logic circuits. An input signal received by the input circuit may be received and input by, for example, but not limited to, a receiver, a signal output by the output circuit may be output to, for example, but not limited to, a transmitter and then transmitted by the transmitter, and the input circuit and the output circuit may be a same circuit, where the circuit is used as the input circuit and the output circuit at different moments. A specific implementation of the input/output interface and the logic circuit is not limited in this application.

In an implementation, when the communication apparatus is a wireless communication device, the wireless communication device may be a terminal device such as a mobile phone. The interface circuit may be a radio frequency processing chip in the wireless communication device, and the processing circuit may be a baseband processing chip in the wireless communication device. The interface circuit may be a radio frequency processing chip in the wireless communication device, and the processing circuit may be a baseband processing chip in the wireless communication device.

According to a sixth aspect, an embodiment of this application provides a communication system . The communication system includes at least one terminal device, where each terminal device is configured to implement the functions of the method according to the first aspect. Optionally, the communication system further includes a network device.

According to a seventh aspect, an embodiment of this application provides a computer-readable storage medium. The computer-readable storage medium is configured to store a computer program or instructions, and when the computer program or instructions is/are run, the method according to the first aspect and any implementation thereof is implemented.

According to an eighth aspect, an embodiment of this application further provides a computer program product that includes instructions. When the computer program product runs on a computer, the method according to the first aspect and any implementation thereof is implemented.

For beneficial effects of the second aspect to the eighth aspect and the implementations thereof, refer to the descriptions of the beneficial effects of the first aspect and any one of the implementations thereof.

### BRIEF DESCRIPTION OF DRAWINGS

FIG. 1 is a schematic architectural diagram of a communication system according to an embodiment of this application;
FIG. 2 is a schematic diagram of a typical application scenario according to an embodiment of this application;
FIG. 3 is a schematic diagram of a sensing window and a resource selection window according to an embodiment of this application;
FIG. 4 is a schematic flowchart of a communication method according to an embodiment of this application;
FIG. 5 is a schematic diagram of the first resource exclusion according to an embodiment of this application;
FIG. 6 is a schematic diagram of the second resource exclusion according to an embodiment of this application;
FIG. 7 is a schematic diagram of the third resource exclusion according to an embodiment of this application;
FIG. 8 is a schematic structural diagram of a communication apparatus according to an embodiment of this application;
FIG. 9 is another schematic structural diagram of a communication apparatus according to an embodiment of this application.

### DESCRIPTION OF EMBODIMENTS

The technical solutions provided in the embodiments of this application may be applied to a communication-sensing integrated system. The communication-sensing integrated system is a system in which a communication system and a sensing system are integrated. Sensing (sensing) may also be understood as detection, for example, detecting a position, a distance, an angle, or the like of a target object. In the communication-sensing integrated system, one or more communication devices may be used as sensing (detection) nodes to form a sensing network. A working principle of sensing is to determine attribute information (for example, information about a speed, a distance, a shape, or a size) of a sensed target by sending a signal and receiving a signal (also referred to as an echo signal) reflected by the sensed target after the signal is sent. The sensed target may be a fixed object, for example, a mountain, a forest, or a building, or may be a movable object, for example, a vehicle, an unmanned aerial vehicle, a pedestrian, or a terminal device. A communication device that functions as a sensing node is also referred to as a sensing device, a sensing apparatus, or a detector, or the like. Any device having a sensing function may be used as a sensing device. For example, a terminal device having a sensing function is a type of sensing device.

The embodiments of this application do not limit the type of the communication system in the communication-sensing integrated system. For example, the communication system may be one or more of the following: a long term evolution (long term evolution, LTE) system, a 5th generation mobile communication technology (5th generation mobile communication technology, 5G) system, that is, an NR system, or a next generation communication system, such as a 6G system. Certainly, the technical solutions in the embodiments of this application may also be applied to another communication system. For example, the technical solutions provided in the embodiments of this application may also be applied to Internet of Vehicles (vehicle to everything, V2X), Internet of Things (internet of things, IoT), narrowband Internet of Things (narrow band internet of things, NB-IoT), or the like, for example, an IoT or a wearable Wi-Fi network based on wireless fidelity (wireless fidelity, WiFi). The wearable Wi-Fi network may be a Wi-Fi network formed by an associated wearable device and a terminal device (for example, a mobile phone) that functions as a virtual access point.

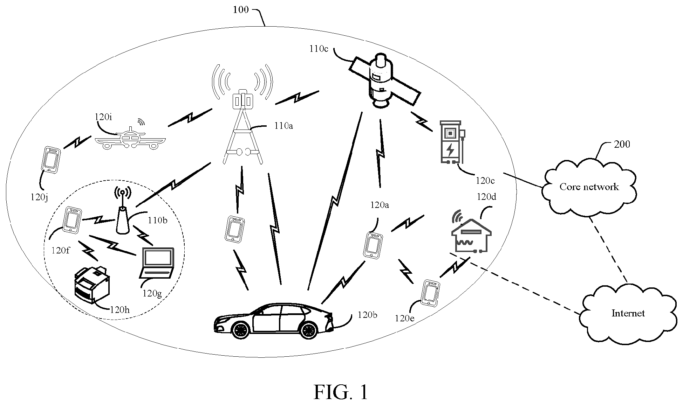

As an example, FIG. 1 is a schematic diagram of a network architecture of a communication system according to an embodiment of this application. The communication system includes a radio access network 100 and a core network 200. Optionally, the communication system may further include the Internet (as an example in FIG. 1).

The radio access network 100 may include at least one network device (for example, 110a, 110b, and 110c in FIG. 1) and at least one terminal device (for example, 120a to 120j in FIG. 1). The network architecture shown in FIG. 1 is merely an example, and there may be fewer or more terminal devices and/or network devices. The communication system described in the embodiments of this application is intended to describe the technical solutions in the embodiments of this application more clearly, and does not constitute a limitation on a communication system to which the embodiments of this application are applicable. For example, the communication system may further include another device, where the another device may include a wireless relay device, a wireless backhaul device, or the like, which are not shown in FIG. 1. A person of ordinary skill in the art may learn that, with evolution of the network architecture, the technical solutions provided in the embodiments of this application are also applicable to similar technical problems. When the technical solutions in the embodiments of this application are applied to another communication system, the devices, components, modules, and the like in the embodiments may be replaced with corresponding devices, components, modules, and the like in the another communication system, which is not limited.

A network device is an access device through which a terminal device accesses the mobile communication system in a wireless manner. The network device in the embodiments of this application is mainly an access network device. Therefore, unless otherwise specified, the "network device" mentioned in the following text refers to a radio access network (radio access network, RAN) device, which may be briefly referred to as an access network device. The RAN may be a 3GPP-related cellular system, for example, a 5G mobile communication system or a future-oriented evolved system (for example, a 6G mobile communication system). Alternatively, the RAN may be an open access network (open RAN, O-RAN, or ORAN), a cloud radio access network (cloud radio access network, CRAN), a virtualized radio access network (virtualized RAN, vRAN), or the like. Alternatively, the RAN may be a communication system obtained by converging two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be a macro base station, a micro base station, an indoor base station , a relay node, a donor node/host node, a radio controller, or the like. The RAN node may also be a server, a wearable device, a vehicle, an in-vehicle device, or the like. For example, the RAN node in the V2X technology may be a roadside unit (road side unit, RSU).

In another possible scenario, a RAN node may be a module or unit that performs some functions of a base station; or multiple RAN nodes may collaborate to assist a terminal device in achieving wireless access, with different RAN nodes each implementing some functions of the base station. For example, a RAN node may be a central unit (central unit, CU), a distributed unit (distributed unit, DU), a radio unit (radio unit, RU), or the like. The functions of the CU may be implemented by one entity, or may also be implemented by different entities. For instance, the functions of the CU may be further divided, that is, the control plane and the user plane are separated and implemented by different entities, namely a control plane CU entity (i.e., CU-control plane (control plane, CP) entity) and a user plane CU entity (i.e., CU-user plane (user plane, UP) entity). The CU-CP entity and the CU-UP entity may be coupled to a DU to jointly perform the functions of the RAN node. The CU and the DU may be separately disposed, or may be included in the same network element, for example, in a baseband unit (baseband unit, BBU).

In different systems, the CU (or the CU-CP and the CU-UP), the DU, or the RU may have different names, but a person skilled in the art may understand meanings thereof. For example, in the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, a CU, a CU-CP, a CU-UP, a DU, and an RU are used as examples for description in this application. Any one of the CU (or the CU-CP, the CU-UP), the DU, and the RU in this application may be implemented by using a software module, a hardware module, or a combination of a software module and a hardware module.

The CU and the DU may be configured according to the protocol-layer functions of the wireless network that they respectively implement. For example, the CU is configured to implement the packet data convergence protocol (packet data convergence protocol, PDCP) layer and protocol layers above the PDCP layer (e.g., radio resource control (radio resource control, RRC) layer and/or a function of a service data adaptation protocol (service data adaptation protocol, SDAP) layer, etc.); the DU is configured to implement the protocol layers below the PDCP layer (e.g., a radio link control (radio link control, RLC) layer, a MAC layer, and/or a physical (physical, PHY) layer, or the like). For another example, the CU is configured to implement protocol layers above the PDCP layer (e.g. RRC layer and/or SDAP layer), the DU is configured to implement functions of the PDCP layer and lower protocol layers (e.g., an RLC layer, a MAC layer, and/or a PHY layer). For specific descriptions of the foregoing protocol layers, reference may be made to a relevant technical specification of the 3GPP or a technical specification of another applicable communications protocol. The foregoing division of the processing functions of the CU and the DU based on the protocol layer is merely an example, and may alternatively be divided in another manner. This is not limited in this application. For example, in a design, the CU or the DU may be further divided into some processing functions of the protocol layer. In a design, some functions of the RLC layer and functions of protocol layers above the RLC layer are set in the CU, and remaining functions of the RLC layer and functions of protocol layers below the RLC layer are set in the DU.

The terminal device, also referred to as user equipment, has wireless transceiver capabilities and can send signals to a network device, or receive signals from the network device. In the embodiments of this application, any device capable of performing data communication with a base station may be considered as a terminal device. The terminal device includes user equipment (user equipment, UE), a terminal, an access station, a UE station, a remote station, a wireless communication device, a user apparatus, a chip, or the like. The terminal device may be widely used in various scenarios, such as D2D communication, V2X communication, machine type communication (machine-type communication, MTC), IoT, virtual reality, augmented reality, industrial control, self-driving, telemedicine, smart grid, smart furniture, smart office , smart wearable, smart transportation, or smart city, and the like. For example, the terminal device may be a mobile phone, a computer, a mobile internet device (mobile internet device, MID), a wearable device, a virtual reality (virtual reality, VR) device, an augmented reality (augmented reality, AR) device, a robotic arm, a camera, a robot, or a smart home device (for example, a television, an air conditioner, a floor sweeping robot, a speaker, or a set-top box), a relay (relay), a customer premises equipment (customer premise equipment, CPE), an unmanned aerial vehicle (UAV), a helicopter, an airplane, a ship, a robot, a robotic arm, a smart home device, or the like. The embodiments of this application do not limit the specific technologies or device forms used by the terminal device.

When the terminal device is applied to V2X, the terminal device may also be referred to as a V2X device, for example, an intelligent vehicle (smart car or intelligent car), a digital vehicle (digital car), an unmanned vehicle (unmanned car or driverless car or pilotless car or automobile), an automatic vehicle (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a roadside unit (road site unit, RSU).

The various terminal devices described above, if located on a vehicle (for example, placed/installed inside the vehicle), may be considered as vehicle-mounted terminal devices. The vehicle-mounted terminal device may be built into an in-vehicle module, an in-vehicle module assembly, an in-vehicle component, an in-vehicle chip, or an in-vehicle unit of the vehicle as one or more components or units, and the vehicle may implement the methods in this application by using the built-in in-vehicle module, in-vehicle module assembly, in-vehicle component, in-vehicle chip, or in-vehicle unit. The vehicle-mounted terminal device may be an entire vehicle device, an in-vehicle module, a vehicle, an on board unit (on board unit, OBU), an RSU, an in-vehicle infotainment system (or referred to as an in-vehicle sending unit) (telematics box, T-box), a chip, a system on chip (system on chip, SOC), or the like. The chip or the SOC may be installed in the vehicle, the OBU, the RSU, or the T-box. The terminal devices support direct communication (PC5) interface communication, that is, support transmission through a sidelink.

In addition, in the embodiments of this application, the terminal device may be an apparatus configured to implement a function of the terminal device, or may be an apparatus, for example, a chip system, that can support the terminal device in implementing the function, and the apparatus may be installed in the terminal device. For example, the terminal device may also be a vehicle detector. In the embodiments of this application, the chip system may be formed by a chip, or may include the chip and other discrete components. In the technical solutions provided in the embodiments of this application, an example in which an apparatus configured to implement a function of the terminal device is the terminal device itself is used to describe the technical solutions provided in the embodiments of this application. The terminal device may be a terminal device, or may be a chip disposed in the terminal device. Unless otherwise specified, the terminal device and the terminal device may be interchangeable.

In the system shown in FIG. 1, the terminal devices may communicate with each other based on sidelinks. A sidelink is a link established between devices of a same type, and may also be referred to as an edge link, a secondary link, or the like. The devices of the same type may be a link between terminal devices, or may be a link between network devices, or may be a link between relay nodes, or the like. This is not limited in this embodiment of this application. When the terminal device has a sensing function, for example, when the terminal device is a vehicle detector or a sensor in a gas station, the terminal device may also be used as a sensing node.

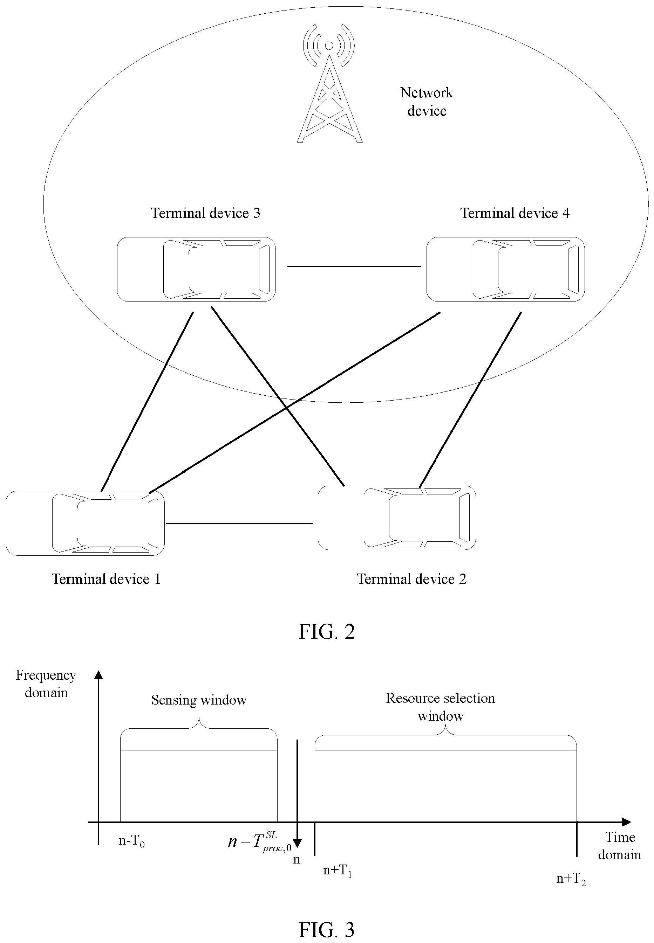

For ease of differentiation, a signal used for sensing is referred to as a sensing signal, and a signal used for communication is referred to as a communication signal in contrast. The sensing signal may also be referred to as a sounding signal, a radar signal, a radar sensing signal, a radar sounding signal, an environmental sensing signal, or the like. The sensing signal may be a pulse signal, or may be a signal that may exist in a wireless communication system, for example, a sounding reference signal (sounding reference signal, SRS), a demodulation reference signal (demodulation reference signal, DMRS), or a channel state information reference signal (channel state information reference signal, CSI-RS). The communication signal, for example, includes a signal carried on a physical downlink shared channel (physical downlink shared channel, PDSCH), a signal carried on a physical sidelink shared channel (physical sidelink shared channel, PSSCH), and the like. In particular, the communication signal may also be used for sensing. As a typical application scenario of integrated communication and sensing, this is illustrated in FIG. 2. FIG. 2 includes four terminal devices and one network device. The terminal devices in FIG. 2 may perform communication with or without network infrastructure. For ease of description, this specification uses an example in which the terminal devices in FIG. 2 are vehicle-mounted terminal devices, that is, an example in which the embodiments of this application are applied to V2X scenarios. A specific form of the terminal device is not limited in the embodiments of this application. For example, the terminal device may also be a mobile phone or the like. The four terminal devices in FIG. 2 are respectively a terminal device 1, a terminal device 2, a terminal device 3, and a terminal device 4. Any one of the four terminal devices may send information to the other three terminal devices in the surrounding, or may receive information from the other three terminal devices. The quantity of terminal devices in FIG. 2 is merely an example. In an actual application, the network device may provide services for a plurality of terminal devices. In FIG. 2, an example is used in which the terminal device 1 and the terminal device 2 have no network coverage, while the terminal device 3 and the terminal device 4 have network coverage.

In the system shown in FIG. 2 , terminal devices 1 to 4 may communicate with each other via sidelink communication. Any of the terminal devices 1 to 4 can also be used for sensing. For example, terminal device 1 includes an on-board radar, and terminal device 1 can transmit sensing signals to perceive the environment around other vehicles, such as the positions of other vehicles and objects around them, thereby providing assistance in blind spot monitoring, lane change assistance, collision warning, adaptive cruise control, and other aspects.

Before sending a communication signal, the terminal device needs to determine the resources that can be used. There are mainly two resource allocation modes for sidelink communication: one is the resource allocation mode (mode-1) where the network device allocates resources, and the other is the resource selection mode (mode-2) where the terminal device autonomously selects resources. Mode-1 is primarily applied to V2X communication in scenarios with network coverage, where the base station allocates resources to each terminal device. In mode-2, the transmission resources of the terminal device do not depend on the network device, and this mode is not limited by network coverage. Regardless of whether there is network coverage, the terminal device can communicate using this mode. The embodiments of this application mainly focus on mode-2, therefore, the following mainly describes mode-2, while mode-1 will not be discussed in detail.

Mode-2 refers to a case in which a network device may allocate one or more resource pools in advance, and a terminal device may autonomously select an available resource from the one or more resource pools. The resource pool is a set of time-frequency resources used by the terminal device for sidelink communication. The resource pool includes one or more frequency domain units in frequency domain. The frequency domain unit may be a resource element (resource element, RE), a resource block (resources block, RB), a subchannel (sub channel), a carrier (carrier), a bandwidth part (BWP, bandwidth part), or the like. For ease of description, in the embodiments of this application, an example in which the frequency domain unit is a subchannel is used, unless otherwise specified. The resource pool includes one or more time units in time domain. The time unit may be a symbol, a slot (slot), a mini-slot (mini-slot), a subframe, a frame, a half subframe, a half frame, or the like. The one or more time units may be consecutive in time, or may be discrete.

In a case where there is network coverage , the network device may configure a resource pool by using a system information block (system information block, SIB), cell-specific (cell-specific) RRC signaling, or UE-specific (UE-specific) RRC signaling. For example, the network device may send sidelink resource configuration information by using the SIB, cell-specific RRC signaling, or UE-specific RRC signaling, where the resource configuration information may be used to indicate a resource pool and/or a sidelink bandwidth part (bandwidth part, BWP) configuration for sidelink communication. In a case where there is no network coverage, the resource pool may be preconfigured.

Before performing communication (for example, transmitting sidelink information), each terminal device needs to determine a resource used for transmitting the sidelink information. "Transmission" in this embodiment of this application includes sending and/or receiving. Each terminal device determines a resource used for transmitting the sidelink information by sensing, in a sensing window (which may also be referred to as a listening window), sidelink control information (sidelink control information, SCI) sent by other terminal devices in the resource pool.

The SCI is divided into 1st-stage SCI (1st-stage SCI) and second-stage SCI (2nd-stage SCI). The 1st-stage SCI is carried on a physical sidelink control channel (physical sidelink control channel, PSCCH), and the 1st-stage SCI is used to schedule the second-stage SCI and the PSSCH.

The 1st-stage SCI includes a frequency resource assignment (frequency resource assignment) field and a time resource assignment (time resource assignment) field. The frequency resource assignment field indicates a frequency domain resource of the PSSCH, and the time resource assignment field indicates a time domain resource of the PSSCH. Optionally, the 1st-stage SCI further includes a resource reservation period (resource reservation period) field. The resource reservation period field indicates a period of a resource reserved for the PSSCH. A value of the resource reservation period field is configured by the network device, or preconfigured (preconfiguration), or predefined. For example, the network device indicates, by using radio resource control (radio resource control, RRC) signaling, the time domain resource, the frequency domain resource, and the period of the PSSCH to the terminal device. The content indicated by the RRC signaling may be determined based on the sl-ResourceReservePeriod.

The second-stage SCI is carried on a PSSCH. The second-stage SCI is mainly used for hybrid automatic repeat request (hybrid automatic repeat request, HARQ) feedback of NR SL, such as indicating information such as a HARQ process number (process number), a source identifier (source ID), and a destination identifier (destination ID). A format of the second-stage SCI is indicated by a second-stage SCI format (2nd-stage SCI format) field in the 1st-stage SCI.

After receiving the SCI and correctly decoding the 1st-stage SCI, the terminal device decodes the second-stage SCI based on a decoding result of the 1st-stage SCI, that is, decodes the PSSCH. To reduce complexity of blind decoding (blind decoding) of the PSCCH by the terminal device, a time-frequency resource location of the PSCCH is relatively fixed, and a format of the 1st-stage SCI carried on the PSCCH is relatively unique. In this way, the terminal device detects, at a fixed time-frequency resource location of the PSCCH, whether the 1st-stage SCI exists, without the need to blindly detect a time-frequency resource location where the PSCCH is located, or without the need to blindly detect SCIs in different formats.

The following uses the terminal device 1 as an example to describe a resource selection process.

The terminal device 1 may sense (sense) SCIs sent by other terminal devices in the resource pool in a sensing window (which may also be referred to as a listening window). The sensing includes a process of detecting (listening or sensing) the SCI, or may include a process of detecting the SCI, decoding the SCI, and measuring a signal strength (for example, reference signal received power (reference signal receiving power, RSRP)) of a resource based on an indication of the SCI. The terminal device 1 selects a resource by itself in the resource selection window (resource selection window, RSW) based on a sensing result. It is assumed that the terminal device 1 learns, at the PHY layer through the MAC layer, that information needs to be transmitted, and the terminal device 1 determines to trigger resource selection in the time unit n. In this case, the sensing window may be defined as T slots before the resource selection is triggered, and the resource selection window may be [n+T1, n+T2], where T, T1, and T2 are all greater than 0, as shown in FIG. 3. FIG. 3 shows a sensing window and a resource selection window.

Herein, ${T}_{proc , 1}^{SL}$ is the delay for terminal device 1 to process resource selection and data transmission. The value of ${T}_{proc , 1}^{SL}$ may vary for terminal devices with different capabilities. The value of ${T}_{proc , 1}^{SL}$ is also related to the subcarrier spacing *µ_{SL}* used for transmitting sidelink information, as shown in Table 1. *T*_{2*min*} ≤ *T*₂ ≤ *PDB*. *T*_{2*min*} may be predefined, or may be configured by the network device or another terminal device through RRC signaling. PDB, which stands for packet delay budget, is a parameter used to reflect the transmission delay requirement of the data to be sent, and the unit may be milliseconds (ms) or slots. Using the example in FIG. 2 again, where terminal device 1 sends first data to terminal device 2, terminal device 1 needs to ensure that the data is sent within the remaining PDB; otherwise, the transmission is considered a failure.

**Table 1**

| *µ_{SL}* | ${T}_{proc , 1}^{SL}$ (Unit is slot) |
|---|---|
| 0 | 3 |
| 1 | 5 |
| 2 | 9 |
| 3 | 17 |

The sensing window may be $\left[n-{T}_{0}, n-{T}_{proc , 0}^{SL}\right)$, where ${T}_{proc , 0}^{SL}$ includes a delay of terminal device 1 in processing a sensing result. The value of ${T}_{proc , 0}^{SL}$ may vary for terminal devices with different capabilities. The value of ${T}_{proc , 0}^{SL}$ is related to the subcarrier spacing *µ_{SL}* used for transmitting sidelink information, as shown in Table 2.

**Table 2**

| *µ_{SL}* | ${T}_{proc , 0}^{SL}$ (Unit is slot) |
|---|---|
| 0 | 1 |
| 1 | 1 |
| 2 | 2 |
| 3 | 4 |

If the SCI sensed by terminal device 1 includes a resource reserved by another terminal device, and the reserved resource is located within the resource selection window [n+T1, n+T2], terminal device 1 measures a resource corresponding to the reserved resource within the resource selection window, and an RSRP of the resource may be obtained through the measurement. If the measured RSRP is greater than the RSRP threshold, it may be considered that the resource is already occupied, and terminal device 1 excludes the resource from the resource selection window. If the measured RSRP is less than the RSRP threshold, it may be considered that the resource is currently not occupied, and terminal device 1 may select the resource from the resource selection window as a candidate resource for sending the sidelink information. The RSRP threshold is associated with a priority *prio_{TX}* of the information to be sent and a priority *prio_{RX}* indicated by the received SCI. For example, the RSRP threshold may be the *"prio_{RX} +* (*prio_{TX}* - 1)×8"th RSRP threshold in a set of RSRP thresholds configured for the resource pool.

It may be understood that the initially available resource set S_{A} is a set of all time-frequency resources in the resource selection window. For example, S_{A} is all candidate time-frequency resource units in the resource selection window, where a candidate time-frequency resource unit is a unit formed by one slot and at least one subchannel. The terminal device 1 excludes, from the resource set S_{A}, an unavailable resource (for example, a resource that has been occupied or reserved) based on the measurement result of the resource. For example, a resource is excluded from the resource set S_{A} if the resource satisfies the following condition A or condition B.

Condition A: The slot t is a slot within the sensing window, and the first terminal device does not perform listening or sensing in the slot t. For example, the first terminal device is in a transmission state in the slot t.

Condition B: It is assumed that 1st-stage SCI is received at a moment t, and there is an overlap between the candidate time-frequency resource and a slot of a periodically reserved resource configured by the resource pool (for example, configured by using a higher layer parameter sl-ResourceReservePeriodList).

After some resources are excluded from the resource set S_{A} based on condition A and condition B, if the proportion of the remaining resources in the resource selection window is less than a certain threshold, for example, X%, then the unavailable resources are excluded again from the resource set S_{A}. That is, the unavailable resources are not excluded from the resource set S_{A} based on condition A and condition B. For example, unavailable resources are excluded from the resource set S_{A} based on condition C to condition E, for example, resources that simultaneously satisfy conditions C to E are excluded from the resource set S_{A}.

Condition C: The 1st-stage SCI received is successfully decoded.

Condition D: An energy measurement result of the reserved resource indicated by the received 1st-stage SCI is greater than a certain threshold. For example, the 1st-stage SCI indicates that the reserved resource is used to transmit a PSSCH, which includes resources for a PSSCH demodulation reference signal (de-modulation reference signal, DMRS). Condition D may be that the RSRP of the resource is higher than an RSRP threshold. It may be understood that the PSSCH time-frequency resource further includes a time-frequency resource reserved at a periodicity, and a time-frequency resource reserved by using a time domain resource indicator value (time resource indicator value, TRVI) and a frequency domain resource indicator value (frequency resource indicator value, FRVI). The RSRP threshold and the RSRP threshold value may be interchangeable, where the RSRP threshold value is associated with a priority, that is, the RSRP threshold value may be determined based on the priority.

Condition E: The resource reserved as indicated by the received 1st-stage SCI is within the resource selection window. The resource reserved as indicated by the 1st-stage SCI may include reserved resources in a plurality of consecutive periods and reserved resources indicated by the TRVI and the FRVI.

For example, the terminal device 1 receives the 1st-stage SCI in a slot, and the decoding is successful. If the resource reserved as indicated by the 1st-stage SCI is within the resource selection window, and an energy measurement result of the resource reserved as indicated by the 1st-stage SCI is greater than a threshold, the terminal device 1 excludes, from the resource set S_{A}, the resource reserved as indicated by the 1st-stage SCI.

After the unavailable resources are excluded from the resource set S_{A} according to condition C to condition E, if a proportion of the remaining resources in the resource selection window is less than X%, the RSRP threshold may be increased. For example, the RSRP threshold is increased by 3 decibels (decibel, dB) each time, and the unavailable resources are excluded from the resource set S_{A} according to condition C to condition E again until a proportion of the remaining resources in the resource selection window is not less than X%. X% may be (pre)configured.

Similar to sending a communication signal, before sending a sensing signal, the terminal device also needs to determine resources that can be used. For ease of description, in the embodiments of this application, a resource carrying a communication signal is referred to as a communication resource, and a resource carrying a sensing signal is referred to as a sensing resource. The resources in the resource pool allocated to the terminal device can be used for both communication signal transmission and sensing signal transmission. The terminal device selects the communication resource and the sensing resource from the same resource pool. If the communication resource of one terminal device overlaps the sensing resource of another terminal device, the sensing signal will cause interference to the communication signal, thereby affecting communication performance. In addition, if two terminal devices use the same resource to send sensing signals, these two terminal devices will also interfere with each other. For example, in the scenario shown in FIG. 2, if resources used by adjacent vehicles in the same direction of traffic flow all overlap or partially overlap, these vehicles will continuously interfere with each other.

To resolve the foregoing problem, a solution provided in the embodiments of this application is described. In the embodiments of this application, when a terminal device selects a sensing resource, the communication resources and/or sensing resources that are being used or reserved by other terminal devices are excluded, so as to reduce or avoid conflicts between the selected sensing resource and the communication resources of other terminal devices, thereby reducing or avoiding interference of the sensing signal to the communication signal.

In the embodiments of this application, the "resource selection window" and the "selection window" may be interchangeable, and the "sensing window" and the "listening window" may be interchangeable. (Pre)configuration includes (pre)configuration by the network device and (pre)configuration by the terminal device. The (pre)configuration by the network device may be performed by using one or more of an SIB, RRC signaling, and a MAC control element (control element, CE). The (pre)configuration by the terminal device may be performed based on PC5-RRC signaling. For example, for the first terminal device, if X_1 is (pre)configured, X_1 may be indicated or configured for the first terminal device by the network device through RRC signaling, SIB, or master information block (master information block, MIB) information, or X_1 may be indicated or configured for the first terminal device by the second terminal device through PC5 RRC signaling.

The time unit may be a subframe, a frame, a half subframe, a half frame, a slot (slot), a mini-slot (mini-slot), or an orthogonal frequency division modulation (orthogonal frequency division modulation, OFDM) symbol. One mini-slot may include two or more OFDM symbols, and one slot may include 14 OFDM symbols. The frequency domain unit may be a subcarrier, a resource element (resource element, RE), a physical resource block (physical resource block, PRB), a resource block group (resource block group, RBG), a subchannel, or the like. One PRB includes 12 REs in frequency domain, and one RBG may include two PRBs, four PRBs, eight PRBs, or 16 PRBs. There is no limitation on a bandwidth occupied by a subchannel. For example, a bandwidth occupied by one subchannel is 20 MHz.

"When," "if," and "if" each indicate that the apparatus will perform a corresponding processing under a certain objective condition, and do not limit the time, nor do they require the apparatus to perform a judgment action when the processing is performed, nor do they imply any other limitation. Unless otherwise specified, the two expressions translated as "if" are interchangeable; "when" and "under the condition that" are interchangeable; and "when" and "if" are interchangeable.

In the embodiments of this application, terms such as "example" or "for example" are used to indicate an example, an illustration, or a description. Any embodiment or design scheme described as "example" or "for example" in this application should not be construed as being more preferred or having more advantages than other embodiments or design schemes. Specifically, the use of the terms such as "example" or "for example" is intended to present a related concept in a specific manner.

In the embodiments of this application, unless otherwise specified, the number of nouns indicates "a singular noun or a plural noun," that is, "one or more." "At least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. For example, A/B indicates "A or B." "At least one of the following" or a similar expression thereof refers to any combination of these items, including any combination of a single item or a plurality of items. For example, at least one of a, b, or c indicates the following cases: a, b, c, a and b, a and c, b and c, or a, b, and c, where a, b, and c may be singular or multiple.

In the embodiments of this application, ordinal numbers such as "first" and "second" are used to distinguish between a plurality of objects, and are not used to limit a size, content, sequence, time sequence, priority, or importance degree of the plurality of objects. For example, the first threshold and the second threshold refer to two different thresholds, and do not indicate different content, priorities, or importance degrees of the two thresholds. For a technical feature, technical features in the technical feature are distinguished by using terms such as "A," "B," "C," and "D." There is no chronological order or order of magnitude between the technical features described by "A," "B," "C," and "D." For example, condition A and condition B in this specification are merely used to distinguish between different conditions, and do not limit a sequence or order of importance between condition A and condition B, or priorities or importance degrees of the conditions.

The following provides a detailed description of the solutions provided in the embodiments of this application with reference to the accompanying drawings. In the following description, an example in which the communication method provided in the embodiments of this application is applied to the network architecture shown in FIG. 1 or FIG. 2 is used. The network architecture and application scenarios described in the embodiments of this application are intended to describe the technical solutions in the embodiments of this application more clearly, and do not constitute a limitation on the technical solutions provided in the embodiments of this application. A person of ordinary skill in the art may know that, with evolution of the network architecture and emergence of new application scenarios, the technical solutions provided in the embodiments of this application are also applicable to similar technical problems.

The following describes the communication method by using an example in which the communication method is performed by a first terminal device according to an embodiment of this application. Steps performed by the terminal device may be implemented by the terminal device itself, or may be implemented by a component in the terminal device (such as a chip, a processing unit, or a processor). The terminal device may be the terminal device itself, or may be a chip (system) in the terminal device. It should be noted that an embodiment of this application is merely described by using an example in which the communication method is performed by the first terminal device, and is not limited to the first terminal device. For example, the communication method in the embodiments of this application may also be performed by more terminal devices. It should be understood that when more terminal devices are involved, each of these terminal devices performs a same procedure. The first terminal device may perform communication when there is network infrastructure (for example, a network device) or when there is no network infrastructure.

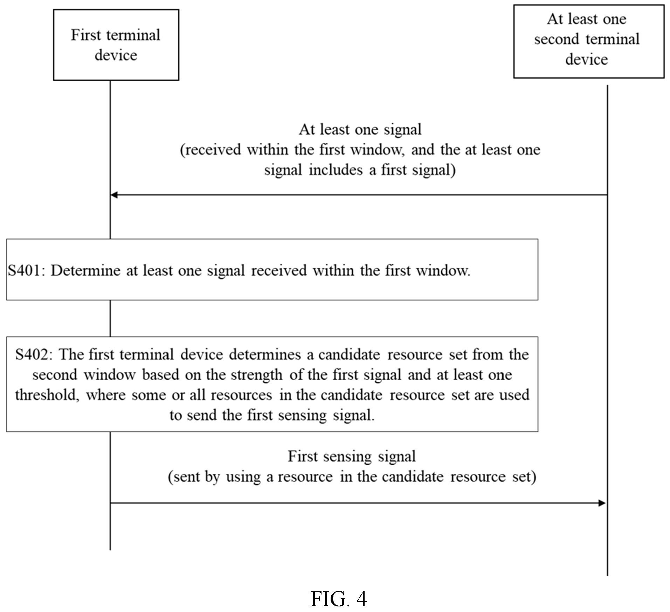

For example, FIG. 4 is a schematic flowchart of a communication method 400 according to an embodiment of this application. FIG. 4 uses an example in which the communication method 400 is performed by a first terminal device. It should be understood that the communication method 400 may also be implemented by another apparatus, for example, performed by a chip or a communication apparatus having a communication function. As shown in FIG. 4, the procedure of the communication method 400 includes the following steps.

S401. A first terminal device determines at least one signal received in a first window.

The first window may be a sensing window, and a size of the first window is not limited in this embodiment of this application. For example, the first window may be [n- T₃, n- T₄) in time domain, where n is a time for triggering resource selection, T₃ may be (pre)configured, and T₄ may include a delay of the first terminal device in processing a sensing result and is related to a subcarrier spacing *µ_{SL}* used for transmitting sidelink information. For example, the first window may be $\left[n-{T}_{0}, n-{T}_{proc , 0}^{SL}\right)$, as shown in FIG. 3. That is, T₃ = *T*₀ and ${T}_{4} = {T}_{proc , 0}^{SL}$. For specific values of *T*₀ and ${T}_{proc , 0}^{SL}$, refer to the foregoing related content, and details are not described herein again.

The first terminal device may determine, by using the at least one signal received in the first window, the reserved resource in the second window. The second window may be a resource selection window, and includes at least one time-frequency resource. The at least one time-frequency resource is a set that includes M time units and N frequency domain units, and both M and N are positive integers. The M time units may be continuous or discontinuous, and the N frequency domain units may be continuous or discontinuous. M and N may be (pre)configured or predefined. For example, N=L1-Lcom, where L1 is a frequency bandwidth required by a sensing signal, and Lcom is a bandwidth of a communication signal. L1 may be configured by using higher layer signaling, for example, L1 is configured by using RRC signaling or MAC CE signaling. When the first terminal device does not need to send the communication signal but has a sensing requirement, the first terminal device needs to select a frequency band with a bandwidth of L1 to send the sensing signal. In a possible scenario, when sending a communication signal, the first terminal device further needs to send a sensing signal, or when sending a sensing signal, the first terminal device further needs to send a communication signal. In this case, the sensing signal may be transmitted on a part of the bandwidth of the sensing signal, and the communication signal may be transmitted on the other part of the bandwidth of the sensing signal. Alternatively, the first terminal device may perform sensing by using the communication signal (that is, the communication signal is used as the sensing signal). For example, it is assumed that the bandwidth of the communication signal is Lcom, a frequency band of L1-Lcom may be additionally selected to send the sensing signal separately. Considering that the communication signal and the sensing signal are designed differently, sensing performance may be different, and the sensing signal may be sent by selecting the bandwidth of L1.

The second window may be [*n*+ T₅, *n* + T₆), where n is a time at which resource selection is triggered, T₅ is related to a delay of the first terminal device in processing resource selection and data transmission and is also related to a subcarrier spacing *µ_{SL}* used by the first terminal device to transmit sidelink information, and T₆ is related to a transmission delay of data to be sent by the first terminal device. For example, the second window may be [*n*+ T₁, *n* + T₂), as shown in FIG. 3. That is, T₅ = T₁ and T₆ = T₂. For specific values of T₁ and T₂, refer to the foregoing related content, and details are not described herein again.

The at least one signal may include at least one SCI or a signal carrying at least one SCI, and is used to indicate a resource reserved by another communication apparatus other than the first terminal device. For example, if another terminal device (for example, the second terminal device) reserves a resource, the second terminal device sends an SCI to indicate the reserved resource. The resource reserved by the second terminal device includes a resource for retransmission and a resource reserved periodically. Similarly, when the third terminal device reserves a resource in the second window, the third terminal device also sends an SCI to indicate the reserved resource. In this way, the first terminal device may receive one or more signals from one or more other communication apparatuses in the first window. For each received signal, the first terminal device may determine a resource indicated by the signal. For example, the first terminal device may receive, in the first window, a signal A from the second terminal device, and determine a time-frequency resource indicated by the signal A. For another example, the first terminal device may receive, in the first window, a signal B from the third terminal device, and determine a time-frequency resource indicated by the signal B. The time-frequency resource indicated by each signal includes a resource corresponding to the reserved resource indicated by the signal in the second window. For example, the time-frequency resource indicated by the signal A includes a resource corresponding to the reserved resource indicated by the signal A in the second window.

The at least one signal may also include a signal (namely, a sensing signal) with a sensing function. The sensing signal may indicate a resource reserved by a communication apparatus that sends the sensing signal. For example, the sensing signal may carry resource reservation information. It should be noted that, for the sensing signal, the resource reservation information may not necessarily be indicated in real time, but may be (pre)configured or predefined. The at least one signal may include both a signal carrying at least one SCI and a sensing signal or another possible signal. The at least one signal may also indicate both a sensing resource and a communication resource, or may indicate both a reserved sensing resource and a reserved communication resource.

The resources in the second window may be used for sending both the sensing signal and the communication signal. If the resource used by the first terminal device to send the sensing signal overlaps the resource used by another terminal device to send the communication signal, the sensing signal will cause interference to the communication signal, thereby affecting communication performance. Therefore, to reduce or even avoid interference caused by the first terminal device sending the sensing signal to communication signals and/or sensing signals of other communication apparatuses, when sending the sensing signal, the first terminal device may determine, from the second window based on the measurement result of the first signal and the at least one threshold, a candidate resource for sending the sensing signal. The measurement result of the first signal includes a signal to interference plus noise ratio (signal to interference plus noise ratio, SINR), a signal to noise ratio (signal to noise ratio, SNR), an RSRP, a received signal strength indication (received signal strength indication, RSRI), a reference signal received quality (reference signal receiving quality, RSRQ), or the like obtained by measuring the first signal. The measurement result of the first signal may be characterized by the strength of the first signal, or the measurement result of the first signal may characterize the strength of the first signal. The following uses an example in which the first terminal device determines a candidate resource set from the second window based on the strength of the first signal and the at least one threshold.

S402: The first terminal device determines a candidate resource set from the second window based on the strength of the first signal and at least one threshold, where some or all resources in the candidate resource set are used to send the first sensing signal.

The first signal belongs to at least one signal, where the at least one signal may include one first signal or a plurality of first signals. Alternatively, the at least one signal includes first signals from at least one communication apparatus. For example, using the example in FIG. 2, the first terminal device is the terminal device 1, and another terminal device may be one or more of the terminal device 2, the terminal device 3, and the terminal device 4. The at least one signal may be first signals sent by the one or more terminal devices. The first signal sent by a communication apparatus may indicate a resource used or reserved by the communication apparatus. The first signals sent by different communication apparatuses may have the same or different content. For example, the first signal sent by the second terminal device indicates a resource A used or reserved by the second terminal device, and the first signal sent by the third terminal device indicates a resource B used or reserved by the third terminal device. The at least one signal includes the first signal A and the first signal B, and the time-frequency resources indicated by the at least one signal include the resource A and the resource B.

For each first signal of the at least one signal, the first terminal device may determine the candidate resource set in the second window based on the strength of the first signal and the at least one threshold. A process in which the first terminal device determines the candidate resource set from the second window based on the strength of the first signal and the at least one threshold may also be a process in which the first terminal device excludes an unavailable resource from the second window based on the strength of the first signal and the at least one threshold. A set of all time-frequency resources in the second window may be an initially available resource set S_{A}. Therefore, a process in which the first terminal device determines the candidate resource set from the second window based on the strength of the first signal and the at least one threshold may also be a process in which the first terminal device excludes an unavailable resource from the initially available resource set S_{A} based on the strength of the first signal and the at least one threshold.

For ease of description, in this embodiment of this application, an example in which the first signal indicates a first time-frequency resource and a resource to be excluded from the second window is referred to as a second time-frequency resource is used It may be understood that the first time-frequency resource includes a resource corresponding to the resource indicated by the first signal in the second window. The determining, by the first terminal device, of the candidate resource set from the second window based on the strength of the first signal and the at least one threshold includes: the first terminal device excludes the second time-frequency resource from the second window based on the strength of the first signal and the at least one threshold. The second time-frequency resource and the first time-frequency resource partially or entirely overlap. That the second time-frequency resource entirely overlaps the first time-frequency resource means that the second time-frequency resource is the first time-frequency resource. The second time-frequency resource partially overlaps the first time-frequency resource includes that the second time-frequency resource partially overlaps the first time-frequency resource in time domain and/or frequency domain. For example, a part of the second time-frequency resource belongs to the first time-frequency resource, or a part of the first time-frequency resource belongs to the second time-frequency resource. In this embodiment of this application, the signal strength may be understood as an energy value of the signal, including energy detection (energy detection, ED), RSRP, a received signal strength indication (received signal strength indication, RSRI), or the like. When the signal strength is RSRP, correspondingly, the threshold is the RSRP threshold. When the signal strength is the RSSI, correspondingly, the threshold is the RSSI threshold.

In the embodiments of this application, any threshold of the at least one threshold is associated with a priority of the to-be-sent information and a priority indicated by the received SCI. The priority indicated by the received SCI includes a priority of a communication signal and/or a sensing signal from another communication apparatus. From this perspective, any one of the at least one threshold is associated with one or more of the following priorities: a priority of the first sensing signal (*prio*_{TX}), a priority of a communication signal from the second communication apparatus (*prio*_{RX,com}), or a priority of a sensing signal from the second communication apparatus (*prio*_{RX,sensing}). The second communication apparatus may be another communication apparatus other than the first terminal device.

It should be noted that a priority of the information/signal is characterized by a priority value. *prio*_{TX}, *prio*_{RX,com}, and *prio*_{RX,sensing} may each be a specific value. Using information as an example, a smaller priority value of the information indicates a higher priority of the information. For example, the priority value of the information may include {0, 1, 2, 3, 4, 5, 6, 7}, and if the priority value of the information is 0, the information has the highest priority. For another example, the priority value of the information may include {1, 2, 3, 4, 5, 6, 7, 8}, and if the priority value of the information is 1, the information has the highest priority. For example, the priority of the information to be sent by the terminal device is higher than a certain priority threshold, that is, the priority value of the information to be sent by the terminal device is less than a certain priority value (the two may be used interchangeably without special explanation).

In a possible implementation, a plurality of thresholds are configured for a resource pool, and for the resource pool, the at least one threshold may be at least one threshold selected from the plurality of thresholds. For example, the first terminal device may select the at least one threshold from the plurality of thresholds based on one or more of the following three priorities: a priority of the first sensing signal, a priority of a communication signal from the second communication apparatus, or a priority of a sensing signal from the second communication apparatus. For example, a threshold in the at least one threshold may be the Yth threshold in a threshold set corresponding to the resource pool, where Y is related to *prio*_{TX}, *prio*_{RX,com}, and *prio*_{RX,sensing}. For example, Y is the (*prio_{RX,com}* + (*prio_{TX}* - 1)×Z)th threshold in the set of threshold values configured for the resource pool. Alternatively, Y is the (*prio_{RX,sensing}* + (*prio_{TX}* - 1)×Z)th threshold in the set of threshold values configured for the resource pool. Alternatively, Y is the (min{*prio_{RX,com}*,*prio_{RX,sensing}*} + (*prio_{TX}* - 1)×Z)th threshold in the set of threshold values configured for the resource pool. Alternatively, Y is the (max {*prio_{RX,com},prio_{RX,sensing}*} + (*prio_{TX}* - 1)×Z)th threshold in the set of threshold values configured for the resource pool. Z is a quantity of priorities defined for the sensing signal. For example, when the sensing signal has eight priorities, namely {0, 1, 2, 3, 4, 5, 6, 7}, Z=8.

Optionally, any threshold of the at least one threshold may be (pre)configured, (pre)defined, or agreed upon through negotiation between the communication parties. After the first terminal device determines the candidate resource set from the second window based on the at least one threshold and the strength of the first signal, the first terminal device sends the first sensing signal by using a resource in the candidate resource set. The first sensing signal includes one or more sensing signals. The at least one threshold may be one threshold or a plurality of thresholds. The second time-frequency resource varies according to the at least one threshold, and there are at least three cases, which are not limited to the following three cases. One case corresponds to one exclusion rule, and a specific exclusion rule used is not limited in this embodiment of this application. "Higher than" and "greater than or equal to" may be used interchangeably in this specification, and "lower than" and "less than or equal to" may be used interchangeably.

Case 1: The at least one threshold includes the first threshold, or the at least one threshold is the first threshold. The first threshold is a threshold used for selecting a resource for the sensing signal.

The first threshold may be used to determine whether a signal is strong or weak, or to determine whether there is a certain type of signal. For example, when a signal strength on a time-frequency resource is higher than the first threshold, it is considered that there is a communication signal on the time-frequency resource. The first threshold may be (pre)configured, predefined, or agreed upon. For example, the first threshold is, for example, -90 dBm. For another example, for a value of the first threshold, refer to the foregoing related content. For example, the first threshold may be determined by the first terminal device based on *prio*_{TX}, *prio*_{RX,com}, and *prio*_{RX,sensing}. Details are not described herein again.

Optionally, the first threshold is lower than the first communication threshold, and the first communication threshold is used to determine a candidate resource for sending a communication signal. The first communication threshold is associated with a priority of a communication signal of the second communication apparatus, or the first communication threshold is determined based on the priority of the communication signal of the second communication apparatus. For example, the first communication threshold may be the (*prio_{RX}* + (*prio_{TX}* - 1)×8)th RSRP threshold in a set of RSRP thresholds configured for the resource pool. A specific name of the first communication threshold is not limited, and this is not limited in this embodiment of this application.

If the strength of the first signal is higher than the first threshold, it may be considered that the first time-frequency resource has been reserved or used by another terminal device, or the terminal device using the first time-frequency resource is geographically far away from the first terminal device, and therefore, signals sent on the same time-frequency resource may interfere with each other. In this case, the second time-frequency resource that partially or entirely overlaps with the first time-frequency resource may be excluded from the second window. After the second time-frequency resource is excluded from the second window, the remaining resources are candidate resources for sending a sensing signal. Compared with the second time-frequency resource, the remaining resources in the second window after the second time-frequency resource is excluded may be understood as resources that are not used or resources that are not used by another communication apparatus. Therefore, sending a sensing signal on the remaining resources does not cause interference to useful signals sent by another communication apparatus, or causes relatively small interference. The useful signals sent by the another communication apparatus include a communication signal and/or a sensing signal.

For case 1, a procedure in which the first terminal device determines the candidate resource set may include the following steps 1A to 7A. It should be noted that the following procedure uses an example in which the minimum granularity of the time domain resource is a slot. The slot in the embodiments of this application may be replaced with a time unit, where the time unit may be a frame, a subframe, a symbol, or the like.

Step 1A: Determine a second window, that is, determine a resource selection window.

For example, the first terminal device triggers resource selection in slot n, and slots occupied by the resource selection window in time domain are [*n*+ T₅, *n* + T₆]. T₅ is determined based on a capability of the first terminal device, and T₆ is determined based on the PDB. For details, refer to the related content in S401, and details are not described herein again.

Step 2A: Determine a first window, that is, determine a sensing window.

For example, the first terminal device triggers resource selection in slot n, and slots occupied by the sensing window in time domain are [n - T₃, n- T₄]. T₃ may be indicated by a higher layer parameter sl-SensingWindow, and T₄ indicates a delay of the first terminal device in processing a sensing result in the sensing window. For details, refer to the related content in S401, and details are not described herein again.

The sequence of step 1A and step 2A is not limited in this embodiment of this application. For example, step 1A may be performed first, and then step 2A is performed; or step 2A may be performed first, and then step 1A is performed; or both steps may be performed simultaneously.

Step 3A: Determine the strength of the first signal and the first threshold.

The first signal includes a signal from the second terminal device and a signal from the third terminal device in the first window, which is sensed by the first terminal device. The strength of the first signal may be an RSRP or an RSSI of the first signal. The first threshold is (pre)configured or predefined, or the first threshold is determined based on a priority of the first sensing signal to be sent by the first terminal device, a priority of a communication signal and/or a sensing signal of the second terminal device, and a priority of a communication signal and/or a sensing signal of the third terminal device. For details, refer to the foregoing related content. Details are not described herein again.

Step 4A: Determine an initial candidate resource set ${S}_{A}^{Initial}$.

The candidate resource set is also referred to as an available resource set. Correspondingly, determining an initial candidate resource set may be replaced with determining an initial available resource set. The initial candidate resource set ${S}_{A}^{Initial}$ includes all candidate resources in the resource pool that are within the resource selection window. One candidate resource *R* may be L consecutive subchannels starting from subchannel x in one slot. In this embodiment of this application, an example in which one candidate resource R is three consecutive subchannels in one slot is used. It may be understood that L=3.

Step 5A: If a candidate resource R (assumed to be located in slot t) in the initial candidate resource set ${S}_{A}^{Initial}$ meets the following two conditions, the candidate resource R is excluded from ${S}_{A}^{Initial}$:

Condition a: The slot t is a slot in the sensing window, and the first terminal device does not perform listening or channel sensing in the slot t. For example, the first terminal device is in a transmission state in the slot t.

Condition b: The 1st-stage SCI is received in the slot t, and the candidate resource R overlaps a slot of a configured periodic reservation resource. For example, the candidate resource R overlaps a slot of a periodic reservation resource configured by a higher layer parameter sl-ResourceReservePeriodList.

Step 5A is an optional step, that is, step 5A is not a step that must be performed. For example, after step 4A is performed, step 5A may not be performed, and a subsequent step 6A may be performed. Alternatively, after step 4A is performed, step 5A and step 6A may be performed.

Step 5a: If, after step 5A, a ratio of a quantity of remaining candidate resources in ${S}_{A}^{Initial}$ to Mₜₒₜₐₗ is less than X, step 4A is performed again. After step 4A is performed again, step 6A may be performed, and the exclusion in step 5A no longer takes effect. In other words, if, after step 5A, the ratio of the quantity of remaining candidate resources in ${S}_{A}^{Initial}$ to Mₜₒₜₐₗ is less than X, step 4A is performed again, and then step 6A may be performed without performing step 5A. Step 5a is an optional step, that is, step 5a is not a step that must be performed. Mₜₒₜₐₗ is a total quantity of resources included in ${S}_{A}^{Initial}$.

Step 6A: If a candidate resource R (assumed to be located in slot t') in ${S}_{A}^{Initial}$ meets the following two conditions, the candidate resource R is excluded from ${S}_{A}^{Initial}$:

Condition c: The first terminal device receives the first signal in the slot t', and the strength of the first signal is higher than the first threshold.

Condition d: The second time-frequency resource is determined to be within the resource selection window based on the first signal.

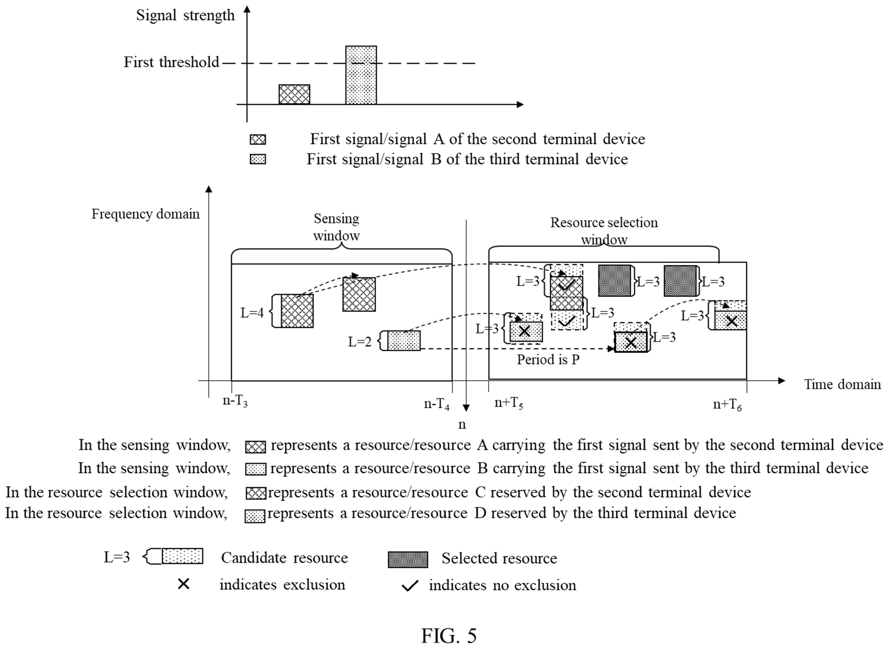

For ease of understanding, refer to FIG. 5. For example, FIG. 5 is a schematic diagram of first resource exclusion of an embodiment of this application. FIG. 5 merely illustrates that the first terminal device excludes the second time-frequency resource based on the strength of the first signal and the first threshold, corresponding to the foregoing step 6A. For ease of differentiation, in FIG. 5, the first signal received by the first terminal device from the second terminal device in the sensing window is referred to as signal A, and the first signal received by the first terminal device from the third terminal device in the sensing window is referred to as signal B. A resource that carries signal A in the sensing window is referred to as resource A, and a resource that carries signal B is referred to as resource B. Signal A carries the SCI of the second terminal device, and signal B carries the SCI of the third terminal device. A time-frequency resource indicated by signal A (referred to as resource C) is within the resource selection window, and a time-frequency resource indicated by signal B (referred to as resource D) is within the resource selection window. As shown in FIG. 5, the first terminal device receives signal A on resource A in the sensing window, and receives signal B on resource B in the sensing window. Signal A occupies four subchannels, and signal B occupies two sub-channels. The resource reserved by the second terminal device and indicated by signal A occupies four sub-channels in the resource selection window, and the resource reserved by the third terminal device and indicated by signal B occupies two sub-channels in the resource selection window. The reserved resource may be a periodic resource. As shown in FIG. 5, the third terminal device reserves resources with a period of P.

FIG. 5 uses an example in which the frequency domain resource where the candidate resource is located is L=3 subchannels. As shown in FIG. 5, the strength of the signal A sent by the second terminal device is lower than the first threshold. Therefore, when the time-frequency resource/resource C indicated by the signal A overlaps the candidate resource, there is no need to exclude the candidate resource. The strength of the signal B sent by the third terminal device is higher than the first threshold. Therefore, the first terminal device excludes the candidate resource corresponding to the time-frequency resource/resource D indicated by the signal B. It can be learned from FIG. 5 that the selected resource (that is, the candidate resource) does not include the resource reserved by the third terminal device, and the first terminal device sends a sensing signal by using the resource in the candidate resource, thereby not causing interference to communication signals and/or sensing signals sent by another terminal device.

Step 7A: If a quantity of remaining candidate resources in ${S}_{A}^{Initial}$ is less than a first proportion of Mₜₒₜₐₗ, increase the first threshold in step 3A, and return to step 4A to continue the procedure. The first proportion is greater than 0 and less than 1, for example, X%, where X may be (pre)configured.

Step 7A may be understood as follows: After the first terminal device excludes the second time-frequency resource from the second window for the first time, if a proportion, in the second window, of the remaining time-frequency resources is less than the first proportion, the first threshold is increased, and the resource exclusion process is performed again based on the increased first threshold and the strength of the first signal. Each time the resource exclusion process is performed, if a quantity of remaining candidate resources in *S_{A}* is less than a first proportion of M, the first threshold continues to be increased, and the resource exclusion process is performed again based on the increased first threshold and the strength of the first signal, until a final candidate resource set *S_{A}* is obtained. If the quantity of remaining candidate resources in *S_{A}* is greater than the first proportion of M, the first terminal device reports the candidate resource set *S_{A}* to a higher layer.

After the first terminal device excludes the second time-frequency resource from the second window for the first time, if the proportion of the remaining time-frequency resources in the second window is less than the first proportion, it may be considered that there are insufficient resources available for the first terminal device to use for sending the sensing signal. In this case, the first threshold is increased, and the resource exclusion process is performed again based on the increased first threshold, so that a larger number of candidate resources can be obtained for the sensing signal. It should be noted that the amount by which the first threshold is increased each time is not limited in this embodiment of this application. For example, the first threshold may be increased by 3 decibels (decibel, dB) each time. For another example, the first threshold may be increased by a first step size, where the first step size is, for example, 1 dB, 2 dB, or 3 dB. The amount by which the first threshold is increased each time may be the same or different.

It should be noted that step 7A is an optional step, that is, step 7A may not be performed when the first terminal device performs resource exclusion.

Optionally, the first threshold may also be different depending on the type of the first signal. For example, if the first signal received by the first terminal device is a communication signal, for example, the first signal carries SCI or the first signal is an SCI, the first terminal device may perform resource exclusion based on the strength of the first signal and the first threshold A. For example, if the strength of the first signal is higher than the first threshold A, the second time-frequency resource is excluded according to the method in case 1. If the first signal received by the first terminal device is not a communication signal, for example, the first signal is a sensing signal, the first terminal device may perform resource exclusion based on the strength of the first signal and the first threshold B. For example, if the strength of the first signal is higher than the first threshold B, the second time-frequency resource is excluded according to the method in case 1. Optionally, the first threshold A and the first threshold B may be the same or different. For example, the first threshold A is determined based on the RSRP of the signal, and the first threshold B is determined based on energy detection of the signal.

Case 2: The at least one threshold includes a second threshold, or the at least one threshold is the second threshold. The second threshold is a threshold used for selecting a resource for sensing signals.

The second threshold may be used to determine a strength of a signal, or to determine whether a certain type of signal exists. The second threshold may be (pre)configured, predefined, or agreed upon. The second threshold is greater than the first threshold. For example, the second threshold is -20 dBm. For another example, for a value of the second threshold, refer to the foregoing related content. For example, the second threshold may be determined by the first terminal device based on *prio*_{TX}, *prio*_{RX,com}, and *prio*_{RX,sensing}, and details are not described herein again. Optionally, the second threshold is higher than a second communication threshold, where the second communication threshold is used to determine a candidate resource for sending a communication signal. The second communication threshold is related to a priority of a communication signal of the second communication apparatus, or the second communication threshold is determined based on the priority of the communication signal of the second communication apparatus. For example, the second communication threshold may be the (prio*_{RX}* + (*prio_{TX}* - 1)×8)th RSRP threshold in a set of RSRP thresholds configured for the resource pool. A specific name of the second communication threshold is not limited, and this is not limited in this embodiment of this application.

If the strength of the first signal is lower than the second threshold, it may be considered that the strength of signals received by other communication apparatuses around the first terminal device is relatively weak. In this case, if the first terminal device still sends the sensing signal by using the first time-frequency resource, the sensing signal will cause interference to the received signals of the other communication apparatuses. For example, continuing with the example in FIG. 2, assume that the first terminal device is terminal device 1 and that the first time-frequency resource includes resources reserved by terminal devices 2 to 4. If the strength of the signal on the first time-frequency resource is lower than the second threshold, the terminal device 1 considers that the first time-frequency resource may be used to send the sensing signal. If terminal devices 2 to 4 also detect the first time-frequency resource, they also consider that the first time-frequency resource may be used to send a communication signal or a sensing signal. When terminal devices 1 to 3 send sensing information on the first time-frequency resource, and the terminal device 4 sends a communication signal on the first time-frequency resource, the superposition of the sensing signals sent by the terminal devices 1 to 3 causes interference to the communication signal sent by the terminal device 4.

Therefore, in case 2, to reduce interference of the sensing signal to the communication signal, when the strength of the second signal is lower than the second threshold, the second time-frequency resource that partially or entirely overlaps with the first time-frequency resource may be excluded from the second window. The second time-frequency resource is a time-frequency resource that may be used by another terminal device to send a sensing signal or a communication signal. Therefore, after the second time-frequency resource is excluded from the second window, the remaining resources in the second window are used to send the sensing signal, thereby causing relatively low interference to the communication signals sent by another communication device.

For case 2, the procedure for the first terminal device to determine the candidate resource set includes the following steps 1B to 7B. It should be noted that the following procedure uses an example in which the minimum granularity of the time domain resource is a slot. The slot in the embodiments of this application may be replaced with a time unit, where the time unit may be a frame, a subframe, a symbol, or the like.

Step 1B: Determine a resource selection window, that is, determine the second window. Step 1B is the same as step 1A, and details are not described herein again.

Step 2B: Determine the sensing window, that is, determine the first window. Step 2B is the same as step 2A, and details are not described herein again.

Step 3B: Determine the strength of the first signal and the first threshold. Step 3B is the same as step 3A, and details are not described herein again.

Step 4B: Determine an initial candidate resource set ${S}_{A}^{Initial}$. Step 4B is the same as step 4A, and details are not described herein again.

Step 5B: If a candidate resource R (assumed to be located in slot t) in the initial candidate resource set ${S}_{A}^{Initial}$ meets condition (a) and condition (b) in the foregoing step 5A, the candidate resource R is excluded from ${S}_{A}^{Initial}$. Step 5B is the same as step 5A, and details are not described herein again. Step 5B is also an optional step.

Step 5b: If, after step 5B, a ratio of a quantity of remaining candidate resources in ${S}_{A}^{Initial}$ to Mₜₒₜₐₗ is less than X, step 4B is performed again. After step 4B is performed again, step 6B may be performed, and the exclusion in step 5B no longer takes effect. Step 5b is the same as step 5a, and details are not described herein again.

Step 6B: If a candidate resource R (assumed to be located in slot t') in ${S}_{A}^{Initial}$ meets the following two conditions, the candidate resource R is excluded from ${S}_{A}^{Initial}$:
Condition c: The first terminal device receives the first signal in the slot t', and the strength of the first signal is less than a second threshold.

Condition d: The second time-frequency resource is determined to be within the resource selection window based on the first signal.

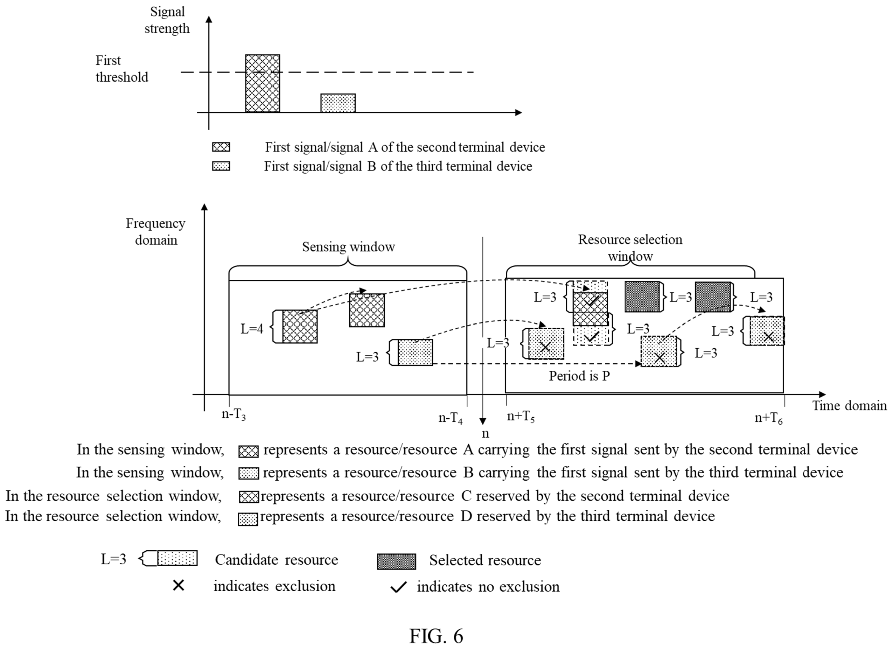

For ease of understanding, refer to FIG. 6. For example, FIG. 6 is a schematic diagram of a second resource exclusion according to an embodiment of this application. A difference between FIG. 6 and FIG. 5 lies in that signal B indicates a resource reserved by a third terminal device.

The resource reserved by the third terminal device occupies three subchannels within the resource selection window, and the strength of signal B is lower than the second threshold.

As shown in FIG. 6, the strength of the signal A sent by the second terminal device is higher than the second threshold. Therefore, when the time-frequency resource/resource C indicated by the signal A overlaps the candidate resource, the candidate resource does not need to be excluded. The strength of the signal B sent by the third terminal device is lower than the second threshold. Therefore, the first terminal device excludes the candidate resource corresponding to the time-frequency resource/resource D indicated by the signal B. It can be learned from FIG. 6 that the selected resource (that is, the candidate resource) does not include the resource reserved by the third terminal device, and the first terminal device sends a sensing signal by using the resource in the candidate resource, thereby not causing interference to communication signals and/or sensing signals sent by another terminal device.

Step 7B: If a quantity of remaining candidate resources in ${S}_{A}^{Initial}$ is less than a first proportion of Mₜₒₜₐₗ, reduce the second threshold in step 3B, and return to step 4B to continue the procedure. The first proportion is greater than 0 and less than 1, for example, X%, where X may be (pre)configured.

Step 7B may be understood as follows: After the first terminal device excludes the second time-frequency resource from the second window for the first time, if a proportion, in the second window, of the remaining time-frequency resources is less than the first proportion, the second threshold is reduced, and the resource exclusion process is performed again based on the increased second threshold and the strength of the first signal. Each time the resource exclusion process is performed, if a quantity of remaining candidate resources in *S_{A}* is less than a first proportion of M, the second threshold continues to be reduced, and the resource exclusion process is performed again based on the reduced second threshold and the strength of the first signal, until a final candidate resource set *S_{A}* is obtained. If the quantity of remaining candidate resources in *S_{A}* is greater than the first proportion of M, the first terminal device reports *S_{A}* to a higher layer.

An amplitude of each reduction of the second threshold is not limited in this embodiment of this application. For example, the second threshold may be reduced by 3 decibels (decibel, dB) each time. For another example, the first threshold may be reduced according to a first step size, where the first step size is, for example, 1 dB, 2 dB, or 3 dB. An amplitude of each reduction of the first threshold may be the same or different.

Step 7B is an optional step, that is, when the first terminal device performs resource exclusion, step 7B may not be performed.

Optionally, resource exclusion methods may also be different depending on different types of the first signal. For example, if the first signal is a communication signal, the second time-frequency resource is excluded according to the method in case 1; or if the first signal is a sensing signal, the second time-frequency resource is excluded according to the method in case 2. For example, if the first signal carries the SCI or the first signal is the SCI, the first terminal device may perform resource exclusion based on the strength of the first signal and the first threshold. If the strength of the first signal is higher than the first threshold, the second time-frequency resource is excluded according to the method in case 1. If the first signal is a sensing signal, the first terminal device may perform resource exclusion based on the strength of the first signal and the second threshold. For example, if the strength of the first signal is lower than the second threshold, the second time-frequency resource is excluded according to the method in case 2. Optionally, the first threshold and the second threshold may be the same or different. For example, the first threshold is determined based on an RSRP of the signal, and the second threshold is determined based on energy detection of the signal.

Case 3: At least one threshold includes a third threshold and a fourth threshold.

The third threshold is similar to the first threshold, and may be greater than or equal to the first threshold. The fourth threshold is similar to the second threshold, and may be less than or equal to the second threshold. For the third threshold, refer to the foregoing first threshold, and for the fourth threshold, refer to the foregoing second threshold. The third threshold is greater than or equal to the first threshold, and the fourth threshold is less than or equal to the second threshold.

Similar to case 1 and case 2, when the strength of the first signal is greater than or equal to the third threshold and less than or equal to the fourth threshold, it may be considered that if a sensing signal is sent on the first time-frequency resource, superposition of all sensing signals on the first time-frequency resource may cause interference to a communication signal and/or another sensing signal on the first time-frequency resource. Therefore, when the strength of the first signal is greater than the third threshold and less than the fourth threshold, the second time-frequency resource that partially or entirely overlaps the first time-frequency resource may be excluded from the second window. After the second time-frequency resource is excluded from the second window, the remaining resources are candidate resources for sending the sensing signal. In this way, interference to the communication signal and/or another sensing signal can be reduced or even avoided, and a relatively small quantity of unavailable resources can be excluded while a relatively large quantity of candidate resources are available, thereby making the candidate resources more flexible.

For case 3, the procedure in which the first terminal device determines the candidate resource set includes the following steps 1C to 7C. It should be noted that the following procedure uses an example in which the minimum granularity of the time domain resource is a slot. The slot in the embodiments of this application may be replaced with a time unit, where the time unit may be a frame, a subframe, a symbol, or the like.

Step 1C: Determine a resource selection window, that is, determine a second window. Step 1C is the same as step 1A, and details are not described herein again.

Step 2C: Determine a sensing window, that is, determine the first window. Step 2C is the same as step 2A, and details are not described herein again.

Step 3C: Determine the strength of the first signal and the first threshold. Step 3C is the same as step 3A, and details are not described herein again.

Step 4C: Determine an initial candidate resource set ${S}_{A}^{Initial}$. Step 4C is the same as step 4A, and details are not described herein again.

Step 5C: If a candidate resource R (assumed to be located in slot t) in the initial candidate resource set ${S}_{A}^{Initial}$ meets condition (a) and condition (b) in the foregoing step 5A, the candidate resource R is excluded from ${S}_{A}^{Initial}$. Step 5C is the same as step 5A, and details are not described herein again. Step 5B is also an optional step.

Step 5c: If, after step 5C, a ratio of a quantity of remaining candidate resources in ${S}_{A}^{Initial}$ to Mₜₒₜₐₗ is less than X, step 4C is performed again. After step 4C is performed again, step 6C may be performed, and the exclusion in step 5C no longer takes effect. Step 5c is the same as step 5a, and details are not described herein again.

Step 6C: If a candidate resource R (assumed to be located in slot t') in ${S}_{A}^{Initial}$ meets the following two conditions, the candidate resource R is excluded from ${S}_{A}^{Initial}$:

Condition c: The first terminal device receives the first signal in the slot t', and the strength of the first signal is higher than a third threshold and lower than a fourth threshold.

Condition d: The second time-frequency resource is determined to be located within the resource selection window based on the first signal.

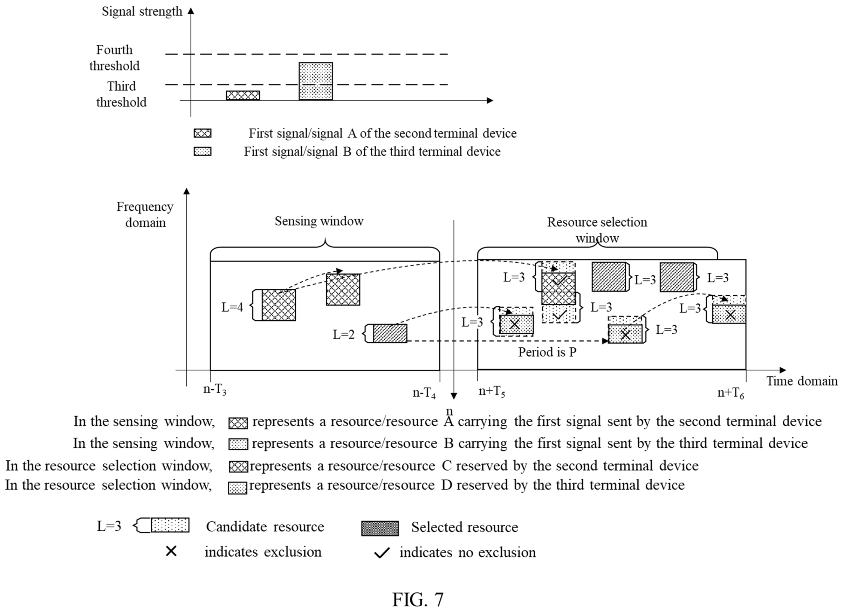

For ease of understanding, refer to FIG. 7. For example, FIG. 7 is a schematic diagram of a third resource exclusion according to an embodiment of this application. A difference between FIG. 7 and FIG. 5 lies in that the strength of the signal B is higher than the third threshold and lower than the fourth threshold.

As shown in FIG. 7, the strength of the signal A sent by the second terminal device is lower than the third threshold. Therefore, when the time-frequency resource/resource C indicated by the signal A overlaps the candidate resource, the candidate resource does not need to be excluded. The strength of the signal B sent by the third terminal device is higher than the third threshold and lower than the fourth threshold. Therefore, the first terminal device excludes the candidate resource corresponding to the time-frequency resource/resource D indicated by the signal B. It can be learned from FIG. 6 that the selected resource (that is, the candidate resource) does not include the resource reserved by the third terminal device. Therefore, when the first terminal device sends a sensing signal by using the resource in the candidate resource, no interference is caused to a communication signal and/or a sensing signal sent by another terminal device.

Step 7B: If a quantity of remaining candidate resources in ${S}_{A}^{Initial}$ is less than a first proportion of Mₜₒₜₐₗ, reduce the second threshold in step 3B, and return to step 4B to continue the procedure. The first proportion is greater than 0 and less than 1, for example, X%, where X may be (pre)configured.

Step 7B may be understood as follows: After the first terminal device excludes the second time-frequency resource from the second window for the first time, if a proportion, in the second window, of the remaining time-frequency resources is less than the first proportion, the third threshold may be reduced and/or the fourth threshold may be increased, and the resource exclusion process may be performed again based on the strength of the first signal and the reduced third threshold and/or the increased fourth threshold. Each time the resource exclusion process is performed, if a quantity of remaining candidate resources in *S_{A}* is less than a first proportion of M, the third threshold continues to be reduced and/or the fourth threshold continues to be increased, and the resource exclusion process is performed again based on the reduced third threshold and/or the increased fourth threshold, until a final candidate resource set *S_{A}* is obtained. If the quantity of remaining candidate resources in *S_{A}* is greater than the first proportion of M, *S_{A}* is reported to a higher layer.

An amplitude by which the third threshold is reduced each time is not limited in this embodiment of this application. For example, the third threshold may be reduced by 3 decibels (decibel, dB) each time. For another example, the third threshold may be reduced by a first step size, where the first step size is, for example, 1 dB, 2 dB, or 3 dB. The first threshold may be reduced by a same amplitude each time, or may be reduced by different amplitudes. An amplitude by which the fourth threshold is increased each time is not limited in this embodiment of this application. For example, the fourth threshold may be increased by 3 decibels (decibel, dB) each time. For another example, the fourth threshold may be increased by a first step size, where the first step size is, for example, 1 dB, 2 dB, or 3 dB. The fourth threshold may be increased by a same amplitude each time, or may be increased by different amplitudes.

Step 7C is an optional step. In other words, when the first terminal device performs resource exclusion, step 7C may not be performed.

Optionally, the resource exclusion method may also be different based on different types of the first signal. For example, if the first signal is a communication signal, the second time-frequency resource is excluded according to the method in case 1. If the first signal is a sensing signal, the second time-frequency resource is excluded according to the method in case 3. For example, if the first signal carries SCI or the first signal is SCI, the first terminal device may perform resource exclusion based on the strength of the first signal and the first threshold. For example, the strength of the first signal is higher than the first threshold, the second time-frequency resource is excluded based on the method in case 1. For example, the first signal is a sensing signal, and the first terminal device may perform resource exclusion based on the strength of the first signal, the third threshold, and the fourth threshold. For example, if the strength of the first signal is between the third threshold and the fourth threshold, the second time-frequency resource is excluded based on the method in Case 3. Optionally, the third threshold may be the same as or different from the first threshold. For example, the first threshold is determined based on the RSRP of the signal, and the third threshold is determined based on energy detection of the signal. The fourth threshold may also be determined based on signal energy detection.

Each of the foregoing cases 1 to 3 actually corresponds to a criterion for selecting a resource for the sensing signal. For the communication-sensing integrated system, the communication method 400 proposes three criteria for selecting a resource for the sensing signal. Interference to the communication signal can be reduced or even avoided based on any one of these three criteria.

For the communication-sensing integrated system, resources for communication or resources for selecting a communication signal may also be selected according to certain criteria. Using the first terminal device as an example, the first terminal device receives the first signal within the sensing window and performs resource exclusion based on the strength of the first signal and a threshold (for example, referred to as a fifth threshold). For example, the first signal indicates a first time-frequency resource, and when the strength of the first signal is higher than the fifth threshold, the second time-frequency resource is excluded, where the second time-frequency resource partially or entirely overlaps the first time-frequency resource. The fifth threshold may be determined based on energy detection, so as to exclude resources that are being used or reserved by another terminal device.

In the foregoing embodiments provided in this application, an example in which the first terminal device selects a resource used for a sensing signal is used as an example to describe the method provided in the embodiments of this application. The steps performed by the first terminal device may be implemented by different functional entities of the terminal device in which the first terminal device is located. To implement the functions in the methods provided in the embodiments of this application, the terminal device may include a hardware structure and/or a software module, and implement the functions in a form of a hardware structure, a software module, or a hardware structure plus a software module. A function in the foregoing functions is executed by using a hardware structure, a software module, or a hardware structure plus a software module, depending on a specific application and a design constraint condition of the technical solution.

The following describes a communication apparatus used to implement the foregoing method in the embodiments of this application with reference to the accompanying drawings. Therefore, all the foregoing content may be used in subsequent embodiments, and repeated content is not described again.

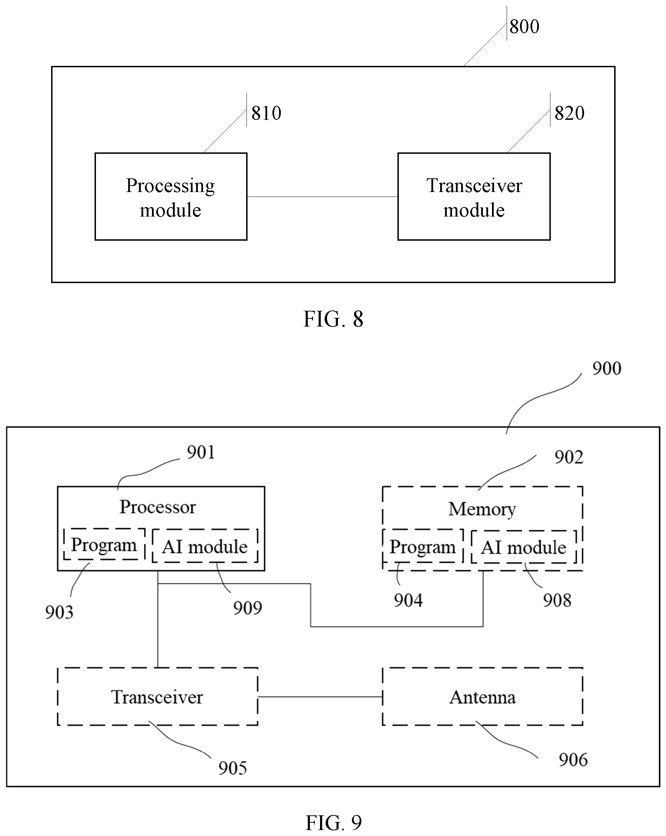

FIG. 8 is a schematic block diagram of a communication apparatus 800 according to an embodiment of this application. The communication apparatus 800 may be the terminal device in the foregoing embodiment. The communication apparatus 800 may correspondingly implement functions or steps implemented by the terminal device in the foregoing method embodiments. For example, the communication apparatus 800 may be the terminal device in FIG. 1 or the terminal device in FIG. 2. Alternatively, the communication apparatus 800 is a chip (system) in a terminal device. Alternatively, the communication apparatus 800 is a software module of the terminal device. The communication apparatus 800 may include a processing module 810 and a transceiver module 820. Optionally, the device may further include a storage module, and the storage module may be configured to store an instruction (code or a program) and/or data. The storage module may be, for example, a memory. The processing module 810 and the transceiver module 820 may be coupled to the storage module. For example, the processing module 810 may read an instruction (code or a program) and/or data in the storage module, to implement a corresponding method. When the communication apparatus 800 is a chip in a terminal device or a terminal device, the storage module may be a storage module in the chip, for example, a register or a cache. For example, the storage module may alternatively be a storage module located outside the chip in the network device/terminal device, such as a read-only memory (read-only memory, ROM), another type of static storage device capable of storing static information and instructions, or a random access memory (random access memory, RAM). The foregoing units may be independently disposed, or may be partially or completely integrated.

In a possible implementation, the processing module 810 may be a processor or a controller, for example, may be a general-purpose central processing unit (central processing unit, CPU), a general-purpose processor, a digital signal processor (digital signal processing, DSP), an application-specific integrated circuit (application specific integrated circuits, ASIC), a field programmable gate array (field programmable gate array, FPGA) or another programmable logic device, a transistor logic device, a hardware component, or any combination thereof. The processing module may implement or perform various example logical blocks, modules, and circuits described with reference to the content disclosed in this application. The processor may also be a combination of components that implement a computing function, for example, a combination of one or more microprocessors, or a combination of a DSP and a microprocessor. The transceiver module 820 is a transceiver, an interface circuit, a bus, a pin, or another possible communication interface, and is configured to receive a signal from another apparatus. For example, when the apparatus is implemented in a chip manner, the transceiver module 820 is an interface circuit of the chip for receiving a signal from another chip or apparatus, or an interface circuit of the chip for sending a signal to another chip or apparatus.

For example, the communication apparatus 800 may implement behaviors and functions of the first terminal device in the foregoing method embodiments. The communication apparatus 800 may be a terminal device, or may be a component (for example, a chip or a circuit) applied to a terminal device, or may be a chip or a chipset in the terminal device or a part of a chip that is configured to perform a function of the related method, or may be a software module that can implement the method (for example, the communication method 400) performed by the first terminal device in the foregoing method embodiments. This is not limited.

In an implementation, the processing module 810 is configured to: determine at least one signal received in a first window, where the at least one signal includes a first signal, a first time-frequency resource indicated by the first signal is located in a second window, and the second window includes at least one time-frequency resource; and determine a candidate resource set from the second window based on the strength of the first signal and at least one threshold, where some or all resources in the candidate resource set are used to send the first sensing signal.

In an optional implementation, the processing module 810 is specifically configured to: exclude the second time-frequency resource from the second window based on the strength of the first signal and at least one threshold, where the second time-frequency resource partially overlaps or entirely overlaps the first time-frequency resource.

In an optional implementation, any threshold of the at least one threshold is related to one or more of the following priorities: a priority of the first sensing signal, a priority of a communication signal from the second communication apparatus, or a priority of a sensing signal from the second communication apparatus.

In an optional implementation, the at least one threshold includes a first threshold, and the strength of the first signal is greater than the first threshold.

In an optional implementation, the first threshold is lower than a first communication threshold, and the first communication threshold is related to a priority of a communication signal of the second communication apparatus.

In an optional implementation, a proportion, in the second window, of the time-frequency resources remaining after the second time-frequency resource is excluded from the second window is less than the first proportion, and the processing module 810 is further configured to: increase the first threshold, and determine the candidate resource set from the second window based on the increased first threshold and the strength of the first signal.

In an optional implementation, the at least one threshold includes a second threshold, and the strength of the first signal is less than the second threshold.

In an optional implementation, the second threshold is higher than the second communication threshold, and the second communication threshold is related to a priority of a communication signal of the second communication apparatus.

In an optional implementation, a proportion, in the second window, of the time-frequency resources remaining after the second time-frequency resource is excluded from the second window is less than the first proportion, and the processing module 810 is further configured to: lower the second threshold, and determine the candidate resource set from the first window based on the lowered second threshold and the strength of the first signal.

In an optional implementation, the at least one threshold includes a third threshold and a fourth threshold, the fourth threshold is greater than the third threshold, the strength of the second signal is higher than the third threshold, and is lower than the fourth threshold.

In an optional implementation, a proportion, in the second window, of the time-frequency resources remaining after the second time-frequency resource is excluded from the second window is less than the first proportion, and the processing module 810 is further configured to: lower the third threshold, and determine the candidate resource set from the second window based on the strength of the first signal and the lowered third threshold; and/or increase the fourth threshold, and determine the candidate resource set from the second window based on the strength of the first signal and the increased fourth threshold.

When the communication apparatus 800 is a chip-level device or circuit, the transceiver module may be an input/output circuit and/or a communication interface; and the processing module is an integrated processor, microprocessor, or integrated circuit.

FIG. 9 is a schematic block diagram of a communication apparatus 900 according to an embodiment of this application. The communication apparatus 900 may be the first terminal device in the foregoing embodiments. For example, the communication apparatus 900 may be the terminal device in FIG. 1; or the communication apparatus 900 may be a chip (system) in the terminal device. In this embodiment of this application, the chip system may include a chip, or may include a chip and other discrete components. For specific functions, refer to the descriptions in the foregoing method embodiments.

The communication apparatus 900 includes one or more processors 901, configured to implement or support the communication apparatus 900 in implementing the functions of the terminal device (for example, the first terminal device) in the method provided in the embodiments of this application. For details, refer to the detailed descriptions in the method example, and details are not described herein again. The processor 901 may also be referred to as a processing unit or a processing module, and may implement certain control functions. The processor 901 may be a general-purpose processor, a dedicated processor, or the like. For example, the processor 901 includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 900 (for example, the terminal device), execute software programs, and/or process data. Different processors may be independent components, or may be integrated into one or more processors, for example, integrated into one or more application-specific integrated circuits (ASICs).

In one design, the processor 901 may include a program 903 (which may sometimes also be referred to as code or instructions), which may be executed on the processor 901, so that the communication apparatus 900 performs the methods described in the following embodiments. In another possible design, the communication apparatus 900 includes a circuit (not shown in FIG. 9), which is configured to implement the functions of the first terminal device in the foregoing embodiments.

In one design, the communication apparatus 900 may include one or more memories 902, which store a program 904 (which may sometimes also be referred to as code or instructions), where the program 904 may be executed on the processor 901, so that the communication apparatus 900 performs the methods described in the foregoing method embodiments.

In one design, the processor 901 and/or the memory 902 may include an artificial intelligence (artificial intelligence, AI) module 909 and an AI module 908, where the AI module 909 is configured to implement AI-related functions. The AI module may be implemented through software, hardware, or a combination of both. For example, the AI module may include a RAN intelligent controller (RAN intelligent controller, RIC) module. For instance, the AI module may be a near-real-time RIC or a non-real-time RIC.

In a possible design, the processor 901 and/or the memory 902 may further store data. The processor and the memory may be separately disposed, or may be integrated together.

In a possible design, the communication apparatus 900 may further include a transceiver 905 and/or an antenna 906. The processor 901 may sometimes also be referred to as a processing unit, and controls the communication apparatus 900. The transceiver 905 may sometimes also be referred to as a transceiver unit, a transceiver, a transceiver circuit, a transceiver, or the like, and is configured to implement a receiving and sending function of the communication apparatus by using the antenna 906.

In a possible design, the communication apparatus 900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 900 may include more or fewer components, or some components may be integrated, or some components may be split. These components may be implemented by hardware, software, or a combination of software and hardware.

The communication apparatus in the foregoing embodiments may be a terminal device, a circuit, or a chip applied to a terminal device or another combined device or component having the foregoing terminal-device functions. When the communication apparatus is a terminal device, the transceiver module may be a transceiver, and may include an antenna, a radio frequency circuit, and the like, and the processing module may be a processor, for example, a CPU. When the communication apparatus is a component having the functions of the foregoing terminal device, the transceiver module may be a radio frequency unit, and the processing module may be a processor. When the communication apparatus is a chip system, the communication apparatus may be an FPGA, an application-specific ASIC, a system on chip (system on chip, SoC), a CPU, a network processor (network processor, NP), a DSP, a micro controller unit (micro controller unit, MCU), a programmable logic device (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (the code instructions are stored in a memory, and may be directly read from the memory, or may be read from the memory through another device) and transmit the code instructions to the processor; and the processor may be configured to run the code instructions to perform the method in the foregoing method embodiments. For another example, the interface circuit may also be a signal transmission interface circuit between a communication processor and a transceiver.

An embodiment of this application further provides a communication system. Specifically, the communication system includes at least one terminal device. For example, the communication system includes at least one terminal device configured to implement a related function in FIG. 4. Optionally, the communication system further includes at least one network device. For details, refer to the related descriptions in the foregoing method embodiments. Details are not described herein again.

An embodiment of this application further provides a computer-readable storage medium, including an instruction, where when the instruction is run on a computer, the computer is enabled to perform the method performed by the first terminal device in FIG. 4.

An embodiment of this application further provides a computer program product, including an instruction, where when the instruction is run on a computer, the computer is enabled to perform the method performed by the first terminal device in FIG. 4.

An embodiment of this application further provides a chip system. The chip system includes a processor, may further include a memory, and is configured to implement the functions of the first terminal device in the foregoing methods. The chip system may be formed by a chip, or may include the chip and other discrete components.

To implement the functions of the communication apparatuses shown in FIG. 8 to FIG. 9, an embodiment of this application further provides a chip, including a processor, configured to support the communication apparatus in implementing the functions related to the first terminal device in the foregoing method embodiments. In a possible design, the chip is connected to a memory, or the chip includes a memory, where the memory is configured to store a computer program or instructions and data necessary for the communication apparatus.

It should be understood that sequence numbers of the foregoing processes do not mean execution sequences in various embodiments of this application. The execution sequences of the processes should be determined according to functions and internal logic of the processes, and should not constitute any limitation on implementation processes of embodiments of this application.

A person of ordinary skill in the art may be aware that, in combination with illustrative logical blocks (illustrative logical block) and steps (step) described in embodiments disclosed in this specification, the functions may be implemented by electronic hardware, computer software, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing described system, apparatus, and unit, refer to a corresponding process in the foregoing method embodiments, and details are not described herein again.

In the embodiments provided in this application, it should be understood that the disclosed systems, apparatuses, and methods may be implemented in other ways. For example, the foregoing apparatus embodiments are merely examples. For example, the division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one place, or may be distributed on a plurality of network units. Some or all of the units may be selected according to an actual need to achieve the objectives of the solutions in the embodiments.

When the functions are implemented in the form of software functional units and sold or used as an independent product, they may be stored in a computer-readable storage medium. Based on such an understanding, the part of the technical solutions of this application the part of the technical solutions of this application that essentially makes a contribution, or a part of the technical solutions, may be embodied in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. Therefore, if these modifications and variations of this application fall within the scope of the claims of this application and their equivalents, this application is also intended to cover these modifications and variations.

## Claims

1. A communication method, comprising:
determining at least one signal received within a first window, wherein the at least one signal comprises a first signal, a first time-frequency resource indicated by the first signal is located in a second window, and the second window comprises at least one time-frequency resource;
determining a candidate resource set from the second window based on the strength of the first signal and at least one threshold, wherein some or all resources in the candidate resource set are used to send a first sensing signal.

2. The method according to claim 1, wherein determining the candidate resource set from the second window based on the strength of the first signal and at least one threshold comprises:
excluding a second time-frequency resource from the second window based on the strength of the first signal and the at least one threshold, wherein the second time-frequency resource partially overlaps or entirely overlaps the first time-frequency resource.

3. The method according to claim 2, wherein any threshold of the at least one threshold is associated with one or more of the following priorities:
a priority of the first sensing signal, a priority of a communication signal from a second communication apparatus, or a priority of a sensing signal from a second communication apparatus.

4. The method according to claim 3, wherein the at least one threshold comprises a first threshold, and the strength of the first signal is higher than the first threshold.

5. The method according to claim 4, wherein the first threshold is lower than a first communication threshold, and the first communication threshold is associated with a priority of a communication signal of a second communication apparatus.

6. The method according to claim 4 or 5, wherein a proportion, in the second window, of the time-frequency resources remaining after the second time-frequency resource is excluded from the second window is less than a first proportion, and the method further comprises:
increasing the first threshold;
determining the candidate resource set from the second window based on the increased first threshold and the strength of the first signal.

7. The method according to claim 3, wherein the at least one threshold comprises a second threshold, and the strength of the first signal is less than the second threshold.

8. The method according to claim 7, wherein the second threshold is higher than a second communication threshold, and the second communication threshold is associated with a priority of a communication signal of a second communication apparatus.

9. The method according to claim 7 or 8, wherein a proportion, in the resource selection window, of the time-frequency resources remaining after the second time-frequency resource is excluded from the second window is less than a first proportion, and the method further comprises:
lowering the second threshold;
determining the candidate resource set from the first window based on the lowered second threshold and the strength of the first signal.

10. The method according to claim 3, wherein the at least one threshold comprises a third threshold and a fourth threshold, the fourth threshold is greater than the third threshold, and the strength of the first signal is higher than the third threshold and lower than the fourth threshold.

11. The method according to claim 10, wherein a proportion, in the resource selection window, of time-frequency resources remaining after the second time-frequency resource is excluded from the second window is less than a first proportion, and the method further comprises:
lowering the third threshold, and determining the candidate resource set from the second window based on the strength of the first signal and the updated third threshold; and/or
raising the fourth threshold, and determining the candidate resource set from the second window based on the strength of the first signal and the updated fourth threshold.

12. A communication apparatus, comprising:
a transceiver module, configured to receive at least one signal in a first window, wherein the at least one signal comprises a first signal, a first time-frequency resource indicated by the first signal is located in a second window, and the second window comprises at least one time-frequency resource;
a processing module, configured to determine the at least one signal, and determine a candidate resource set from the second window based on the strength of the first signal and at least one threshold, wherein some or all resources in the candidate resource set are used to send a first sensing signal.

13. The apparatus according to claim 12, wherein the processing module is specifically configured to:
exclude a second time-frequency resource from the second window based on the strength of the first signal and the at least one threshold, wherein the second time-frequency resource partially overlaps or entirely overlaps the first time-frequency resource.

14. The apparatus according to claim 13, wherein any threshold of the at least one threshold is associated with one or more of the following priorities:
a priority of the first sensing signal, a priority of a communication signal from a second communication apparatus, or a priority of a sensing signal from a second communication apparatus.

15. The apparatus according to claim 14, wherein the at least one threshold comprises a first threshold, and the strength of the first signal is higher than the first threshold.

16. The apparatus according to claim 15, wherein the first threshold is lower than a first communication threshold, and the first communication threshold is associated with a priority of a communication signal of a second communication apparatus.

17. The apparatus according to claim 15 or 16, wherein a proportion, in the second window, of the time-frequency resources remaining after the second time-frequency resource is excluded from the second window is less than a first proportion, and the processing module is further configured to:
increase the first threshold;
determine the candidate resource set from the second window based on the increased first threshold and the strength of the first signal.

18. The apparatus according to claim 14, wherein the at least one threshold comprises a second threshold, and the strength of the first signal is less than the second threshold.

19. The apparatus according to claim 18, wherein the second threshold is higher than a second communication threshold, and the second communication threshold is associated with a priority of a communication signal of a second communication apparatus.

20. The apparatus according to claim 18 or 19, wherein a proportion of the remaining time-frequency resources in the resource selection window after the second time-frequency resource is excluded from the second window is less than a first proportion, and the processing module is further configured to:
lower the second threshold;
determine the candidate resource set from the first window based on the lowered second threshold and the strength of the first signal.

21. The apparatus according to claim 14, wherein the at least one threshold comprises a third threshold and a fourth threshold, the fourth threshold is greater than the third threshold, and the strength of the first signal is higher than the third threshold and lower than the fourth threshold.

22. The apparatus according to claim 21, wherein a proportion, in the resource selection window, of time-frequency resources remaining after the second time-frequency resource is excluded from the second window is less than a first proportion, and the processing module is further configured to:
lower the third threshold, and determine the candidate resource set from the second window based on the strength of the first signal and the updated third threshold; and/or
increase the fourth threshold, and determine the candidate resource set from the second window based on the strength of the first signal and the updated fourth threshold.

23. The apparatus according to any one of claims 12 to 22, wherein the communication apparatus comprises user equipment or a chip.

24. A communication apparatus, wherein the communication apparatus comprises at least one processor, and the at least one processor is configured to enable the communication apparatus to perform the method according to any one of claims 1 to 11.

25. A chip or a chip system, wherein the chip or the chip system comprises:
at least one processor and an interface, wherein the at least one processor is configured to invoke and run an instruction from the interface, and when the at least one processor executes the instruction, the method according to any one of claims 1 to 11 is performed.

26. A computer-readable storage medium, wherein the computer-readable storage medium is configured to store a computer program, and when the computer program is run, the method according to any one of claims 1 to 11 is implemented.

27. A computer program product, wherein the computer program product comprises a computer program, and when the computer program is run, the method according to any one of claims 1 to 11 is implemented.
